(19)

**Europäisches Patentamt**

**European Patent Office**

**Office européen des brevets**

(11) **EP 0 898 393 B1**

(12) **EUROPEAN PATENT SPECIFICATION**

(45) Date of publication and mention
of the grant of the patent:
**11.05.2005 Bulletin 2005/19**

(51) Int Cl.⁷: **H04J 11/00**, H04J 13/00

(21) Application number: **98306566.5**

(22) Date of filing: **18.08.1998**

(54) **Pseudo-orthogonal code generating method and device**

Pseudoorthogonale Kodegenerierverfahren und -gerät

Procédé et appareil de génération de codes pseudo-orthogonaux

(84) Designated Contracting States:
**DE FR GB**

(30) Priority: **18.08.1997 KR 3919997**

(43) Date of publication of application:
**24.02.1999 Bulletin 1999/08**

(73) Proprietor: **Samsung Electronics Co., Ltd.
Suwon-city, Kyungki-do (KR)**

(72) Inventors:
• **Yoon, Soon-Young
Samsung Electronics Co.,Ltd
Suwon-city, Kyungki-do (KR)**
• **Ahn, Jae-Min
Kangnam-gu, Seoul (KR)**
• **Kang, Hee-Won
Chungnang-gu, Seoul (KR)**
• **Kim, Young-ky
Suwon-Shi, Kyungki-do 442-742 (KR)**
• **No, Jong-Seon
Songnam-shi, Kyonggi-do (KR)**
• **Song, Hong-Yeop
Suwon-Shi, Kyungki-do 442-742 (KR)**

• **Chung, Ha-Bong Samsung Electronics Co., Ltd.
Suwon-city Kyungki-do (KR)**
• **Kim, Je-Woo
Songnam-shi, Kyonggi-do (KR)**

(74) Representative: **Lunt, Mark George Francis
Harrison Goddard Foote,
Fountain Precinct
Balm Green
Sheffield S1 2JA (GB)**

(56) References cited:
**EP-A- 0 680 158          WO-A-95/16310
US-A- 4 568 915**

• **I C -L ET AL: "MULTI-CODE CDMA WIRELESS
PERSONAL COMMUNICATIONS NETWORKS"
COMMUNICATIONS - GATEWAY TO
GLOBALIZATION. PROCEEDINGS OF THE
CONFERENCE ON COMMUNICATIONS,
SEATTLE, JUNE 18 - 22, 1995, vol. 2, 18 June
1995, pages 1060-1064, XP000533158
INSTITUTE OF ELECTRICAL AND
ELECTRONICS ENGINEERS**

**Description**

The present invention relates to a pseudo-orthogonal code generating method and device and to a spread spectrum device and method for a CDMA (Code Division Multiple Access) mobile communications system, and in particular, to a device and method for generating a spread spectrum signal using a pseudo-orthogonal code.

US-A-4 568 915 discloses a system in which expanded multilevel code mate pairs are generated by interleaving two multi-bit codes in order to combat the effect of burst errors on wireless transmission.

In a CDMA mobile communications system, a communication is conducted within a given frequency bandwidth shared by multiple users which have been assigned differential codes. A data transmission rate for a user is generally very low relative to the frequency bandwidth. In order to transmit a low-rate data within the high-rate frequency bandwidth, spread spectrum codes are used for discriminating users. Hence, low-rate data bit sequences are spread with a high-rate spreading code to be transmitted/received within the given frequency bandwidth.

An orthogonal code spreading scheme using Walsh codes can be employed in a CDMA mobile communications system for discrimination of users and spectrum spreading. The orthogonality of the Walsh codes enables users or channels to be discriminated without interference in an ideal case.

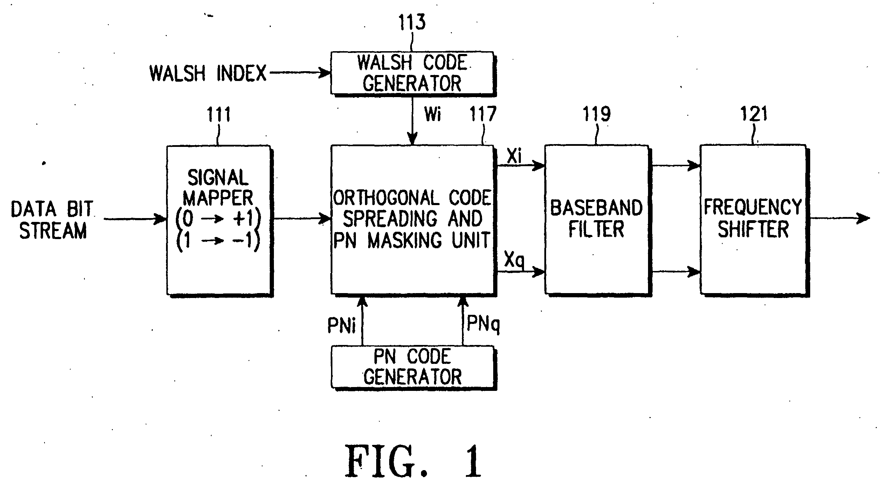

Figure 1 is a block diagram of a conventional spread spectrum signal generating device using Walsh codes.

Referring to figure 1, a signal mapper 111 changes 0s and 1s of an input data bit sequence to +1s and -1s, respectively. An orthogonal code spreading and PN masking portion 117 spreads the signal values +1s and -1s at a high rate. Specifically, the orthogonal code spreading and PN (Pseudo random Noise) masking portion 117 orthogonally spreads the signal received from the signal mapper 111 with an assigned Walsh code Wi and then performs a PN masking on the spread signal using PN codes, that is, PNi and PNq to discriminate base stations or users. Then, the PN-masked signal is baseband-pass filtered by a baseband filter 119 and converted to a radio signal by a frequency shifter 121.

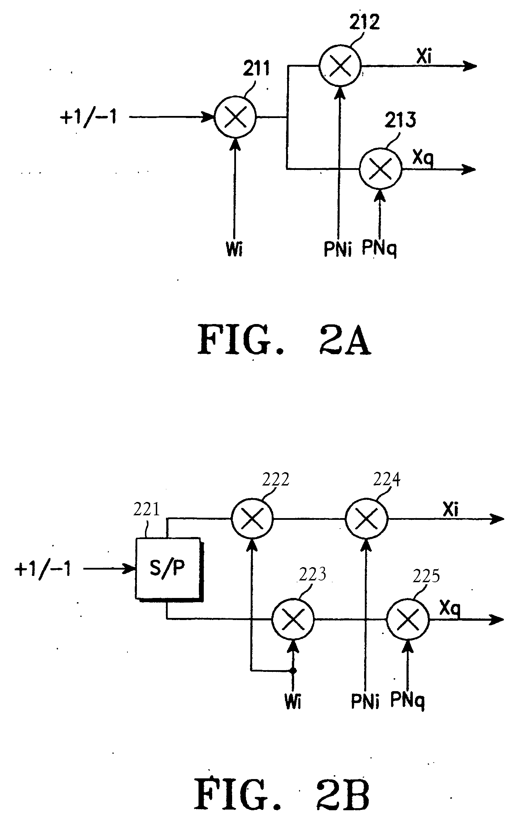

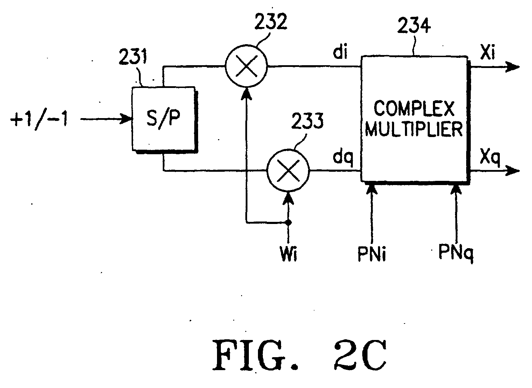

Figures 2A, 2B and 2C are examples of the orthogonal code spreading and PN masking portion 117 shown in figure 1. Figure 2A is a first example of the orthogonal code spreading and PN masking portion 117 of a conventional IS-95 CDMA mobile communications system. Referring to figure 2A, a multiplier 211 multiplies an input signal of +1 or -1 by an assigned Walsh code Wi, for orthogonal spreading. The spread signal is separated into a real part and an imaginary part and applied to multipliers 212 and 213, respectively. Then, the multipliers 212 and 213 multiply the respective spread signals using a pair of PN codes, that is, PNi and PNq for PN masking.

Figure 2B illustrates a second example of an orthogonal code spreading and PN masking portion 117 for doubling the number of available Walsh codes. Referring to figure 2B, a serial-to-parallel converter 221 separately outputs odd numbered and even numbered signals of +1 or -1. Then, multipliers 222 and 223 multiply the odd-numbered signal and the even-numbered signal by the Walsh code Wi, respectively. For PN masking, a multiplier 224 multiplies the output of the multiplier 222 by a PN code, PNi and a multiplier 225 multiplies the output of the multiplier 223 by a PN code, PNq. Since the transmission rate of a +1 or a -1 signal in the directions of a real and imaginary parts is half of that of the input in this method, the length of the Walsh code should be doubled. Thus, the number of available Walsh codes is increased by a factor of two.

Figure 2C is a third example of an orthogonal code spreading and PN masking portion 117 shown in figure 1 in which the number of available Walsh codes is doubled as for the structure of figure 2 and PN masking is performed through complex spreading to thereby make the signal strengths of the real and imaginary parts equal. Referring to figure 2C the serial-to-parallel converter 231 separately outputs odd-numbered and even-numbered signals of +1s or -1s. Then, the multipliers 232 and 233 multiply the odd-numbered signal and the even-numbered signal by the Walsh code Wi, respectively, to produce outputs di and dq. A complex multiplier 234 multiplies di and dq by PNi and PNq, respectively and outputs PN-masked signals, Xi and Xq. Here, the complex multiplier 234 operates as follows:

$$(Xi + jXq) = (di + jdq) * (Pni + jPNq) \qquad (1)$$

The method shown in figure 2C enables a signal to be recovered without interference because a Walsh code used in generating a spread spectrum signal shows a correlation value of 0 with respect to another Walsh code under an ideal condition (i.e. single path propagation).

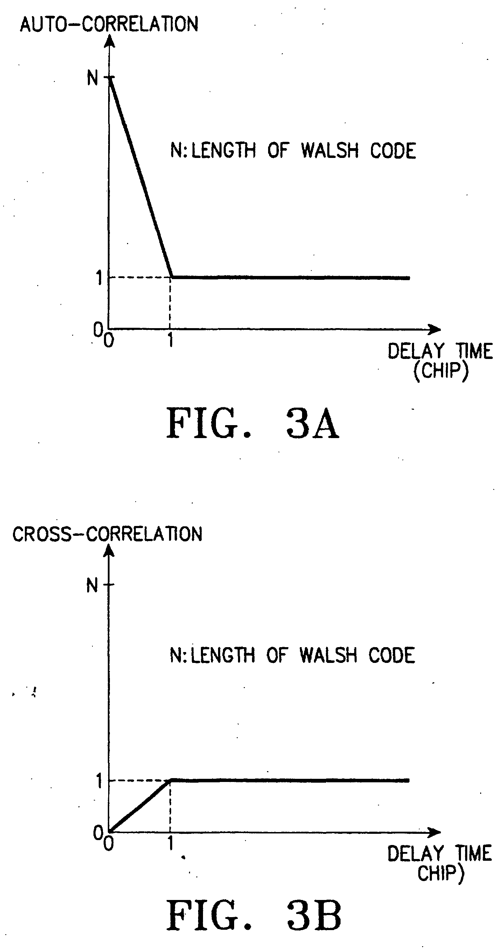

Figures 3A and 3B are graphs of correlation characteristics of Walsh codes. Figure 3A illustrates the relationship between signal delay and auto-correlation and figure 3B illustrates the relationship between signal delay and cross-correlation.

In the case of auto-correlation as shown in figure 3A a spread spectrum signal generated in the orthogonal code spreading and PN masking portions 117 of figures 2A, 2B and 2C is recovered with a strength equal to the length N of a Walsh code in code synchronisation, but its correlation value is not 0 but 1 in code misalignment by one or more chips. In the case of cross-correlation as shown in figure 3B when two Walsh codes are synchronised, there is no interference, but in code misalignment by one or more chips, a 1-interference signal appears, that is, an interference signal having a strength of 1/N relative to that of the original signal.

The influence of the interference signal is inversely proportional to the length N of the Walsh code. If a signal is received by at least two paths and one or more chip-delay exists between the paths, the orthogonality of the Walsh code is lost and an interference is generated due to a delayed signal.

Furthermore, an issue exists as to define one or more chip-delay time in the above situation. A high rate data service typically requires, a frequency bandwidth, which implies that the duration of a single chip progressively becomes less with increasing frequency or data rate. The duration of one chip is generally

$$T_c = \frac{I}{BW} \tag{2}$$

Where $T_c$ is the duration of one chip and BW is an available frequency bandwidth. As noted from equation (2), as BW doubles, $T_c$ decreases by half. Hence, a signal, which is transmitted via a single path in a voice only service, may exhibit a multipath propagation characteristic, that is, time delay of at least one chip duration when an available frequency bandwidth is widened for a high-speed data service. In this case, the orthogonality of a Walsh code may be lost.

Accordingly, a first aspect of the present invention provides a pseudo-orthogonal code generating method for spreading input channel data in a CDMA communication system, the method comprising the steps of selecting M orthogonal codes from N orthogonal codes for forming a pseudo-orthogonal code; and interlacing the elements of the selected M orthogonal codes to generate the pseudo orthogonal code as a sequence of MxN elements.

Advantageously, the present invention facilitates the provision of a high-quality, high-speed data service over a CDMA mobile communications network.

It will be appreciated that the orthogonality of a signal transmitted on a multipath propagation channel is maintained by compensating for the delay time of the signal.

Further, the present invention advantageously prevents or reduces loss of the orthogonality of a spreading code caused by a multipath signal component by spreading data with a multipath resistant pseudo orthogonal code (MRPOC).

A second aspect of the present invention provides a pseudo-orthogonal code generating device for spreading channel data in a CDMA communication system, the device comprising means for selecting M orthogonal codes from N orthogonal codes for forming a pseudo-orthogonal code; and means for interlacing the elements of the selected M orthogonal codes to generate the pseudo orthogonal code as a sequence of MxN elements.

A third aspect of the present invention provides a spread spectrum method using a pseudo-orthogonal code in a CDMA communication system, the method comprising the steps of converting, using a signal converter, at least one input channel data bit stream into a converted signal; generating a pseudo-orthogonal code which is a combination of M different orthogonal codes using a pseudo-orthogonal code generating method, generating, using a PN code generator, a PN code comprising real and imaginary component parts; pseudo-orthogonal code spreading and PN masking, using a pseudo-orthogonal code spreading and masking portion, by dividing the converted signal into M signal sequences, multiplying each signal sequence by the pseudo-orthogonal code, generating MxN sequences; and multiplying each spread signal sequence by a PN code for PN masking; and baseband filtering, using a baseband filter, the output of the pseudo-orthogonal code spreading and masking portion to produce a filtered signal; and shifting, using a frequency shifter, the frequency of the filtered signal.

A fourth aspect of the present invention provides a spread spectrum device using a pseudo-orthogonal code in a CDMA communication system, the device comprising a signal converter for converting an input channel data bit stream into a converted signal; a pseudo-orthogonal code generator for generating a pseudo-orthogonal code which is a combination of M different orthogonal codes using a pseudo-orthogonal code generating device, a PN code generator for generating a PN code comprising real and imaginary component parts; a pseudo-orthogonal code spreading and masking portion for dividing the converted signal into M signal sequences, multiplying each signal sequence by the pseudo-orthogonal code, generating MxN sequences; and multiplying each spread signal sequence by a PN code for PN masking; and a baseband filter for baseband filtering the output of the pseudo-orthogonal code spreading and masking portion to produce a filtered signal; and a frequency shifter for shifting the frequency of the filtered signal.

An embodiment provides a pseudo-orthogonal code generating method, and device, for use in orthogonally spreading channel data in a CDMA mobile communication system. In the method, M orthogonal codes are selected from N orthogonal codes for forming a pseudo-orthogonal code, and the elements of the M orthogonal codes are sequentially interlaced to generate the pseudo-orthogonal as a sequence of MxN elements.

According to another aspect there is provided a device for orthogonally spreading channel data in a CDMA mobile communication system. In the device, a pseudo-orthogonal code generator has a table for storing M orthogonal codes, which are selected from N orthogonal codes to form pseudo-orthogonal codes in the form of index pairs and which generates a pseudo-orthogonal code as a sequence of MxN elements by sequentially interlacing the elements of the M orthogonal codes in an index pair corresponding to an input code index. A multiplexer multiplexes input channel data to M-branch parallel data, a plurality of spreaders spreads the multiplexed M-branch data with M corresponding orthogonal codes by multiplication and a demultiplexer demultiplexes the parallel spread data to produce serial data.

Embodiments of the present invention will now be described, by way if example only, with reference to the accompanying drawings in which:

Figure 1 is a block diagram of a conventional spread spectrum signal generating device using a Walsh code in a CDMA mobile communications system;

Figures 2A, 2B and 2C are block diagrams of examples of the orthogonal code spreading and PN masking portion shown in FIG 1;

Figures 3A and 3B are graphs showing correlation characteristics of a general Walsh code;

Figure 4 is a block diagram of a spread spectrum signal generating device using an MRPOC in a CDMA mobile communications system according to an embodiment of the present invention;

Figures 5A, 5B and 5C are block diagrams of an MRPOC spreading and PN masking portion as shown in figure 4;

Figure 6 is a timing diagram of a combination of Walsh codes for maintaining an orthogonality against one chip-delay and a one-bit delayed combination of Walsh codes;

Figures 7A and 7B are graphs showing correlation characteristics of a pseudo-orthogonal code derived from Walsh codes;

Figure 8 is a block diagram of a spreader using a pseudo-orthogonal code;

Figure 9 is a block diagram of a transmitter using the pseudo-orthogonal code for a reverse link;

Figure 10 is a block diagram of a pseudo-orthogonal code spreading and PN masking portion for a reverse link, in which pseudo-orthogonal codes are applied to a pilot/control channel and a traffic channel and PN masking is performed by complex spreading;

Figure 11 is a block diagram of a pseudo-orthogonal code spreading and PN masking portion for a reverse link, in which pseudo-orthogonal codes are applied to both the pilot/control channel and traffic channel and PN masking is not performed by complex spreading;

Figure 12 is a block diagram of a pseudo-orthogonal code spreading and PN masking portion for a reverse link, in which a pseudo-orthogonal code is applied to only the traffic channel and PN masking is not performed by complex spreading;

Figure 13 is a block diagram of a pseudo-orthogonal code spreading and PN masking portion for a reverse link, in which the traffic channel is separated into odd-numbered bits and even-numbered bits, pseudo-orthogonal codes are applied to the odd-numbered and even-numbered bits, respectively, and PN masking is not performed by complex spreading; and

Figure 14 is a block diagram of a pseudo-orthogonal code spreading and PN masking portion for a reverse link, in which the traffic channel is separated into odd-numbered bits and even-numbered bits, pseudo-orthogonal codes are applied to the odd-numbered and even-numbered bits, respectively, and PN masking is performed by complex spreading.

In orthogonal spreading with a Walsh code, a signal transmitted on a single path propagation channel can have an improved signal-to-noise ratio since the single path propagation channel is free of an interference signal caused by another Walsh code. However, in the presence of at least two paths having a signal arrival time difference of one or more chips, a signal suffers interference from both its own Walsh code and a different Walsh code assigned to another user, thereby losing the benefit of using the Walsh code. Therefore, if there is no interference signal despite a time delay of one or more chips, or interference involved in the existing Walsh codes can be remarkably reduced, the signal-to-noise ratio of a signal transmitted on a multipath propagation channel may be improved as compared to use of the Walsh codes. In an embodiment, an orthogonal code capable of reducing interference caused by a one or more chip-delay is referred to as a multipath resistant pseudo-orthogonal code (MRPOC). In addition, an MRPOC for reducing interference effects imposed by a one-chip delay is called a one-chip resistant pseudo-orthogonal code, and an MRPOC for reducing interference effects imposed by an m-chip delay is called an m-chip resistant pseudo-orthogonal code.

Although Walsh codes are useless for a reverse link due to the difference in path delay time of signals from terminals to a base station in IS-95, a pseudo-orthogonal code capable of minimising, reducing, preferably an interference signal despite a time of one or more chips can be advantageously used on the reverse link with minimum, reduced, preferably time alignment.. Thus, there is a need for exploring such a pseudo orthogonal code and constituting a link using the same.

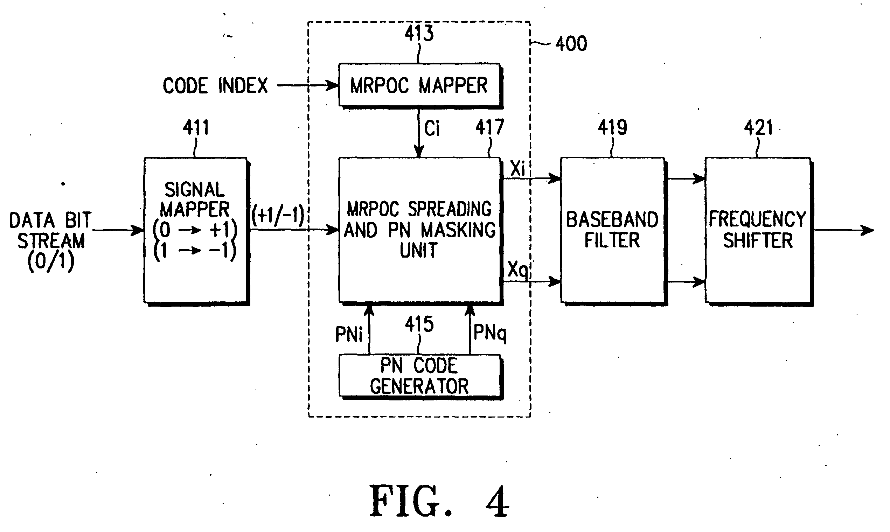

Given an MRPOC, a spread spectrum signal generating method using the code can be realised. Figure 4 is a block diagram of a spread spectrum signal generating device using the MRPOC according to an embodiment of the present invention.

Referring to figure 4, a signal mapper 411 changes 0s and 1s of an input data bit stream to +1s and -1s, respectively. An MRPOC generator 413 generates an MRPOC Ci assigned by the code index of a corresponding channel. A PN code generator 415 generates a pair of PN codes, PNi for a real part and PNq for an imaginary part. An MRPOC spreading and PN masking portion 417 multiplies the signal received from the signal mapper 411 by the MRPOC Ci and then by PNi and PNq for PN masking, and generates signals Xi and Xq. A baseband filter 419 baseband-pass filters the signals Xi and Xq and a frequency shifter 421 shifts the signal received from the baseband filter 419 to an RF (Radio Frequency) signal.

In figure 4, the MRPOC generator 413, the MRPOC spreading and PN masking portion 417, and the PN code generator 415 are spreading portions, and it is assumed that data is transmitted on an ith channel.

Referring to figure 4, the MRPOC generator 413 has a table for storing MRPOCs and selectively outputs an MRPOC corresponding to a code index. The table stores index pairs of orthogonal codes. Here, the index pair refers to a pair of index codes for different orthogonal codes. Therefore, a one-chip resistant pseudo-orthogonal code is a pair of two different orthogonal codes, a two-chip resistant pseudo-orthogonal code is a combination of three different orthogonal codes, and an (m-1) chip resistant pseudo-orthogonal code is a combination of m different orthogonal codes. The code index indicates an address point value in the table.

For a description of an MRPOC Ci generating procedure in the MRPOC generator 413, it is assumed that the number of orthogonal codes in N and the MRPOC Ci is generated using M orthogonal codes. Here, M is smaller than N and Ci = {W1...WM}. That is the MRPOC Ci is obtained by deriving a fractional set A with M elements (n(A)=M) from an orthogonal code set W={W1....WN}. The elements in the set A are different codes. Index pairs in the MRPOC generator 413 can be listed from orthogonal codes, as follows.

(Table 1)

| code index | index pair |
|:---:|:---:|
| 1 | W0 W20 |
| 2 | W2 W35 |
| 3 | W3 W63 |
| 4 | W4 W11 |
| 5 | W5 W47 |
| 6 | W6 W9 |
| = | = |
| = | = |
| = | = |

Orthogonal codes for MRPOC are used only once and the orthogonal code pairs can be designated by test.

When a code index is generated, the orthogonal codes corresponding to the code index are selected. Then, the elements of the selected orthogonal codes are interlaced and thus a sequence of MxN elements is generated as the MRPOC Ci.

A user is assigned an MRPOC Ci for use in spreading data. The Os and 1s of a data bit stream of the ith channel are changed to +1s and -1s respectively by the signal mapper 411. A signal spreading device 400 spreads the signal of +1s and -1s with the MRPOC Ci, performs a PN masking on the spread signal to discriminate between users or base stations, and outputs the PN-masked signal as a complex signal. The baseband filter 419 baseband-pass filters the complex signal and the frequency shifter 421 shifts the signal received from the baseband filter 419 to an RF signal.

The signal spreading device 400 is composed of the MRPOC generator 413, the PN code generator 415, and MRPOC spreading and PN masking portion 417.

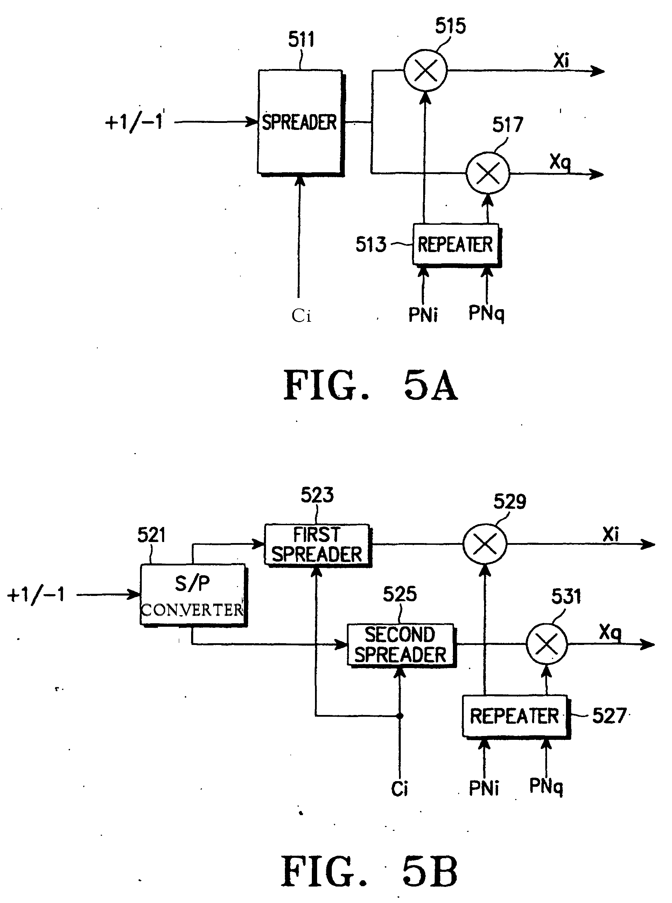

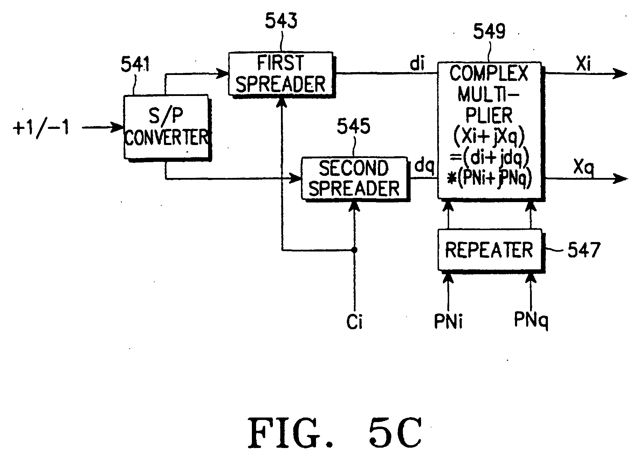

Figures 5A, 5B and 5C are examples of the MRPOC spreading and PN masking portion 417 shown in FIG 4, which are basically similar in structure to the general Walsh code spreading and PN masking portions using orthogonal code spreading device, except that the MRPOC spreading and PN masking portion 417 is substituted for the orthogonal code spreading, and PN masking portion and a PN sequence for PN masking is repeated M times, that is, the period of a PN code is M times longer to obtain the same spreading and masking effects. Here, M indicates that an interference signal can be reduced with respect to a path delay time of (M-1) chips, as compared to the orthogonal spreading using Walsh codes.

Referring to figure 5A, an MRPOC spreader 511 orthogonally spreads a signal of +1s and -1s received from the signal mapper 411 using a MRPOC Ci and separates the spread signal into a real part and an imaginary part. A repeater 513 repeats the PN codes, PNi and PNq received from the PN code generator 415, M times. A multiplier 515 multiplies the real part received from the MRPOC spreader 511 with the M times repeated PN codes, Pni, and generates a spread output Xi. A multiplier 517 multiplies the imaginary part received from the MRPOC spreader 511 with the M times repeated PN code, PNq, and generates a spread output Xq.

Figure 5B illustrates an MRPOC spreading and PN masking portion 417 arranged to increase the number of the available MRPOCs. A serial-to-parallel converter 521 separately outputs odd-numbered and even-numbered signals of +1s and -1s. Then, first and second spreaders multipliers 523 and 525 multiply the odd-numbered signal and the even-numbered signal by the MRPOC Ci, respectively. For PN masking, a multiplier 529 multiplies the output of the first spreader 523 by the M times repeated PN code, Pni, and outputs the spread signal Xi. A multiplier 531 multiplies the output of the second spreader 525 by the M times repeated PN code, PNq, and outputs the spread signal Xq.

Since the transmission rate of a +1 or -1 signal in the directions of real and imaginary parts in half of that for the input in this method, the length of the MRPOC should be doubled. Thus, the number of available MRPOCs is increased by a factor of two.

Figure 5C is a block diagram of the MRPOC spreading and PN masking portion 417 arranged so that the number of available MRPOCs is doubled and PN masking is performed through complex spreading to make the signal strengths of a real part and an imaginary part equal. Referring to figure 5C, a serial-to-parallel converter 541 separately outputs real and imaginary parts of odd-numbered and even-numbered signals of +1s or -1s. Then, first and second spreaders 543 and 545 multiply the odd-numbered signal and the even-numbered signal by the MRPOC Ci, respectively, and output di and dq. A complex multiplier 549 multiplies di and dq by PNi and PNq, respectively and outputs PN-masked signals, Xi and Xq. Here, the complex multiplier 549 operates following equation (1).

In cases where a spread spectrum signal is generated by use of the MRPOC Ci generated according to the embodiment of figure 5C, a correlation value between the MRPOC Ci and another MRPOC is 0, thereby enabling signal recovery without any interference.

In designing a transmitter employing the above spread spectrum method, the orthogonality loss involved in using Walsh codes due to multipath propagation can be suppressed if a delay time is within a predetermined range despite the existence of the multipath propagation characteristic. This is possible by ensuring orthogonality between delayed signal components arising from the multipath signals and a normal signal component. For this purpose, a signal is generally spread with a combination of alternately arranged Walsh codes.

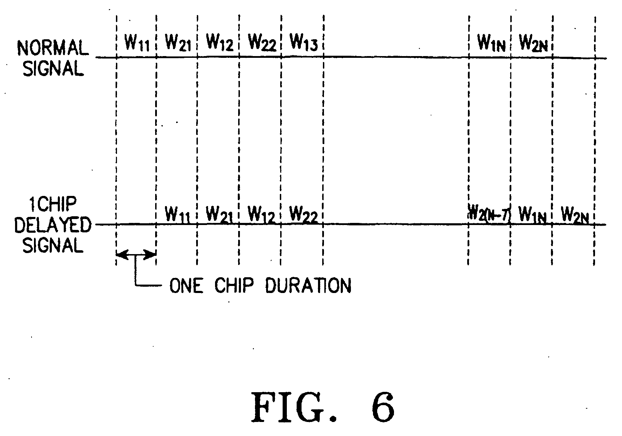

Figure 6 is a timing diagram of a combination of two alternately arranged, Walsh codes, which is mutually orthogonal to such a combination which is delayed by one chip-duration. In figure 6, the normal signal is obtained by combining two Walsh codes W1 and W2. That is, the Walsh codes are arranged in the order of the first element of the Walsh code W1, the first element of the Walsh code W2, the second element of the Walsh code W1, the second element of the Walsh code W2,...., the Nth element of the Walsh code W1, and the Nth element of the Walsh code W2. The newly combined code can be expressed as

$$W_{no\ delay} = \{W11\ W21\ W12\ W22\ W13\ W23, ..., W1N\ W2N\}$$

x and y of Wxy denote an orthogonal code number and an element number of the orthogonal code, respectively. Therefore, W11 is the first element of an orthogonal code W1, and W2N is an Nth element of an orthogonal code W2. Here, an element is a chip. For example, for the number of elements in an orthogonal code=8, pairs of orthogonal codes for forming an MRPOC in the table of the MRPOC generator 413 may be listed as in (table 2).

(Table 2)

| code index | Wx | Wy |
| --- | --- | --- |
| | | Wx1-Wx8 |
| 1 | W1 | ++++++++ |
| | W20 | +-+-+-+- |
| 2 | W2 | ++--++-- |
| | W35 | +--++--+ |
| 3 | W3 | ++++---- |
| | W63 | +-+--+-+ |
| 4 | W4 | ++----++ |
| | W11 | +--+-++- |

Therefore, with a code index of 1 an MRPOC is generated as "+++-+++-+++-+++-", and with a code index of 2, an MRPOC is generated as "+++----++++----+". In the MRPOC generating method as described above, M orthogonal codes are selected from N orthogonal codes, and their combinations are listed in the table. Then, an orthogonal code combination is selected according to a code index and the elements of the orthogonal codes in the combination are interlaced. Thus, MRPOCs Ci are generated. For interlacing, the selected M orthogonal codes are arranged in an MxN matrix and the elements of the orthogonal codes are read from the matrix by columns, thereby generating an MRPOC as a sequence of MxN elements.

A receiver separates the elements of the Walsh code W1 and those of the Walsh code W2 from the above code and decodes them, independently. In this case, the normal signal maintains orthogonality since the correlation values between its Walsh code W1 and a reference Walsh code W1 and between its Walsh code W2 and a reference Walsh code W2 are N. For the one-chip delayed signal, a correlation value is calculated between the reference code W1 and W2 component of the input signal and between the reference code W2 component and a W1 component of the input signal. Since the codes W1 and W2 are different, the correlation value is 0. Therefore, combining Walsh codes in this manner may result in a code which is orthogonal to a signal delayed by one chip. By sequentially combining M different Walsh codes in such a manner as shown in figure 6, a correlation value with respect to a signal delayed by a maximum of (M-1) chips in maximum is always 0, and there exists a correlation value other than 0 with respect to only a normal signal. Thus, a code can be obtained which is orthogonal to a signal delayed by (M-1) chips.

However, a CDMA signal uses a PN code for discrimination between users and base stations and spectrum spreading. The PN code is multiplied by data to be spread. Hence, it is impossible to ensure full orthogonality for the CDMA signal because the orthogonality of a Walsh code with respect to a one chip-delayed signal is lost due to multiplication of the PN code by the Walsh code. To prevent this, a common PN code should be applied to a pair of values resulting from two Walsh codes. In this case, one of the two correlation calculations with respect to the Walsh codes W1 and W2 shows orthogonality and the other results in a value other than 0 (the correlation value obtained from a general Walsh function), in the example of figure 6. Therefore, a correlation value with respect to a one chip delayed signal is not 0 but a half of the correlation value that would be derived from the general Walsh code.

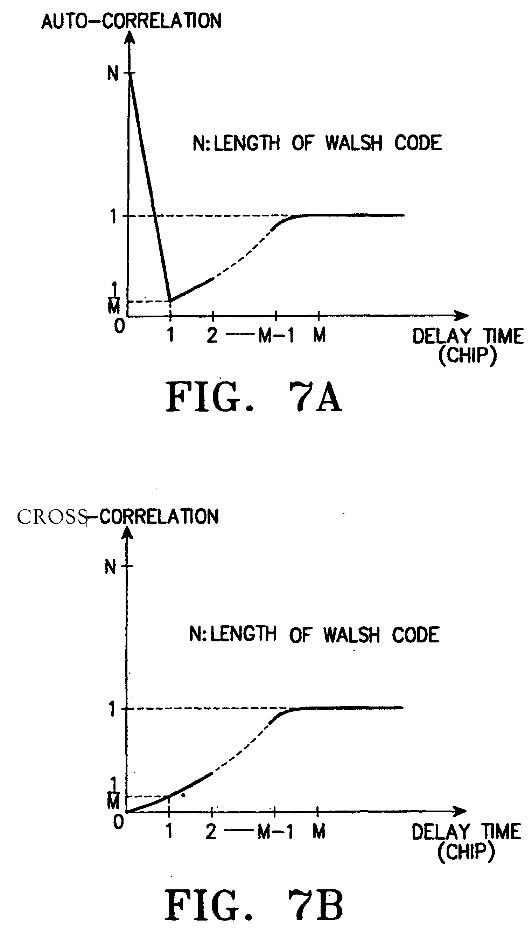

In the case of (M-1) chip delay, a correlation value of 1/M is calculated for one chip-delay and 2/M for a two chip-delay. Figures 7A and 7B are graphs of correlation characteristics of a Walsh code combination, which are improved despite even an (M-1) chip-multipath propagation delay. It is noted from the drawings that the interference when using the combined Walsh code of the present invention is reduced as compared to that caused by a one chip-delayed signal and results in a loss of orthogonality of about $(10*\log_{10}M)$dB. For example, with M=2, the interference drops by about 3dB, and with M=4, by about 6dB.

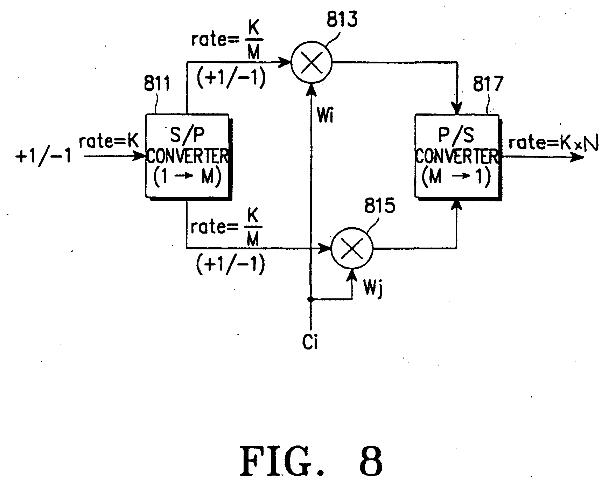

Figure 8 is a block diagram of an MRPOC spreader using the above pseudo-orthogonal code. The MRPOC spreader of figure 8 may be one of those shown in figures 5A, 5B and 5C.

Referring to figure 8, an input to the MRPOC spreader is a signal sequence of +1s and -1s with a transmission rate of K. The input signal sequence is divided into M branches by a serial-to-parallel converter 811, with each divided signal sequence of +1s and -1s having a transmission rate of K/M. That is, the serial-to-parallel converter 811 acts to assign sequentially signals of +1s or -1s to 1 to M branches. Hence, each branch transmits a signal and a transmission

rate of $\frac{1}{M}$.

Assume that an MRPOC is composed of M different Walsh codes and has a length of N. In this case, each signal value at a branch is spread with an N Walsh code sequence.

If a signal at each branch is ai(i=1,2, ...,and M)a Walsh code for the branch is Wi(i=1,2,...,and M), and an element of a Walsh code is Wij(i=1,2,...,and M, and j=1,2,...,and N); a spread signal from each branch can be given in a matrix as shown in the following

$$a,W,=[a,W_{111}a,W_{121}a,W_{131}...,a,W_{iN}] \qquad (3)$$

$$\begin{vmatrix} a_1W_{11} & a_1W_{12} & a_1W_{13} & \cdots & a_1W_{1N} \\ a_2W_{21} & a_2W_{22} & a_2W_{23} & \cdots & a_2W_{2N} \\ \cdot & \cdot & \cdot & \cdot & \cdot \\ \cdot & \cdot & \cdot & \cdot & \cdot \\ \cdot & \cdot & \cdot & \cdot & \cdot \\ a_MW_{M1} & a_MW_{M2} & a_MW_{M3} & \cdots & a_MW_{MN} \end{vmatrix} \cdots\cdots\cdots\cdots \qquad (4)$$

The parallel-to-serial converter 817 reads the above matrix by columns and outputs the read sequence at a data rate of KxN, given as

$$a,W_{11}\ a_2W_{21}...,\ a_MW_{M11},\ a,\ W_{12},\ aW_{33}...,\ a_MW_{MN}$$

That is, the MRPOC spreader changes M data signals of +1s or -1s to MxN signal sequences resistant against a multipath propagation signal delayed by a maximum of (M-1) chips.

The above MRPOCs can be simply generated by use of a general orthogonal code of which, Walsh codes are an example. Other orthogonal codes may be substituted for the Walsh codes to obtain the same effect.

The spread spectrum signal generating method using MRPOCs and the MRPOC generating method have been described in detail. A transmitter using an MRPOC can transmit a signal without interference on a single path propagation channel as with an orthogonal code, and remarkably reduce interference as long as the multipath propagation channel delay does not exceed a delay time of (M-1) chips relative to the orthogonal code.

As for a reverse link in IS-95, only a PN code is applied to a reverse traffic channel to discriminate between users due to the difficulty in ensuring that signals from terminals arrive at a base station at the same time. However, use of the MRPOCs can increase reception performance remarkably relative to the use of a PN code only if transmission signals from the terminals can reach the base station within a time period of (M-1) chips.

In the absence of techniques for concurrent arrival of signals from terminals at a base station, the MRPOCs are useful to some extent. A signal is transmitted from a terminal to the base station on a multipath propagation channel, and the base station performs a despreading using the MRPOC of the corresponding terminal to receive the signal from the terminal. In this process, the base station obtains a signal having a signal component and an interference component. The signal component derives from the signal of the corresponding terminal and the interference component derives from a signal transmitted from another terminal and a delayed signal component from the corresponding terminal. Since there is no effort for concurrent arrival of the transmission signals from the terminals to the base station, the interference component originating from the terminals except for the corresponding terminal appears from the unsynchronized random PN codes. The interference component from the delay signal component of the corresponding terminal is smaller than that from the unsynchronized random PN code if the delay time is within (M-1) chips.

In this context, application of MRPOC to a reverse link can reduce an interference signal generated from a different terminal or a delayed signal from a corresponding terminal, regardless of time alignment for terminals. Needless to say, the inclusion of time alignment reduces the effect of interference signals to an even greater extent when used in conjunction with an MRPOC.

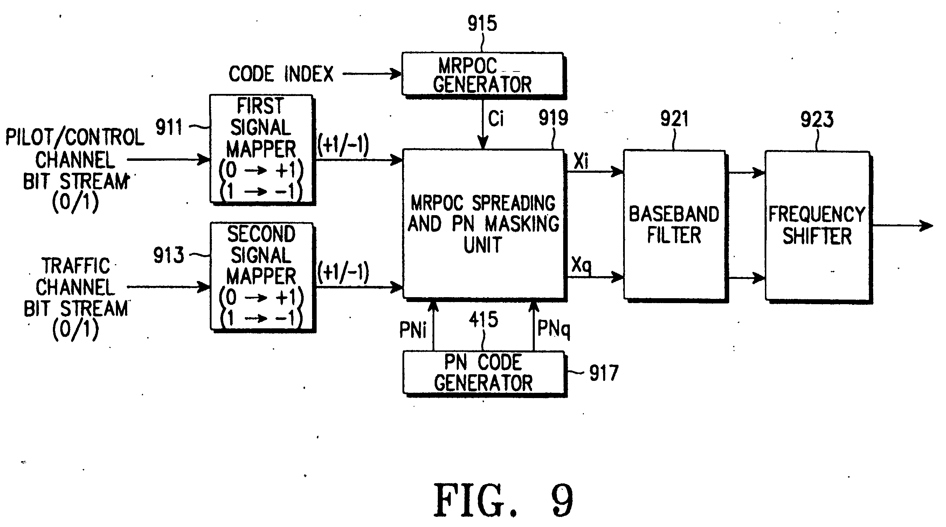

Figure 9 is a block diagram of a transmitter on a reverse link, to which an MRPOC spreader is applied to increase performance.

Referring to figure 9, a first signal mapper 911 changes 0s and 1s of an input pilot/control channel data bit stream to +1s and -1s respectively. A second signal mapper 913 also changes 0s and 1s of an input traffic channel data bit stream to +1s and -1s respectively. An MRPOC generator 915 generates an MRPOC, Ci, assigned by the code index of a corresponding channel. A PN code generator 917 generates PN codes, PNi and PNq for a real part and for an imaginary part. A reverse link MRPOC spreading and PN masking portion 919 spreads the signals received from the first and second signal mappers 911 and 913 with the MRPOC, Ci, and multiplies the spread signal by the PN codes, PNi and PNq, respectively, and generates PN-masked signals Xi and Xq. A baseband filter 921 baseband-pass filters the signals Xi and Xq and a frequency shifter 923 shifts the frequency of the signal received from the baseband filter 921 to an RF frequency.

In figure 9 it is assumed that a pilot/control channel being a reference signal and a traffic channel are occupied by a user terminal.

Referring to figure 9, the user terminal transmits a data bit of 1 or 0 on the traffic channel and a data bit of 1 or 0 as a reference signal on the pilot/control channel, for synchronous demodulation of the traffic channel. The data 1s or 0s are converted to +1s and -1s by the first and second signal mappers 911 and 913. Then, the reverse link MRPOC spreading and PN masking portion 919 generates a spread complex baseband signal with a real component of Xi and an imaginary component of Xq. The baseband filter 921 modulates the signal received from the MRPOC spreading and PN masking portion 919 in an OQPSK (Offset Quadrature Phase Shift Keying) method and filters the modulated signal. The frequency shifter 923 converts the output of the baseband filter 921 to an RF spread signal.

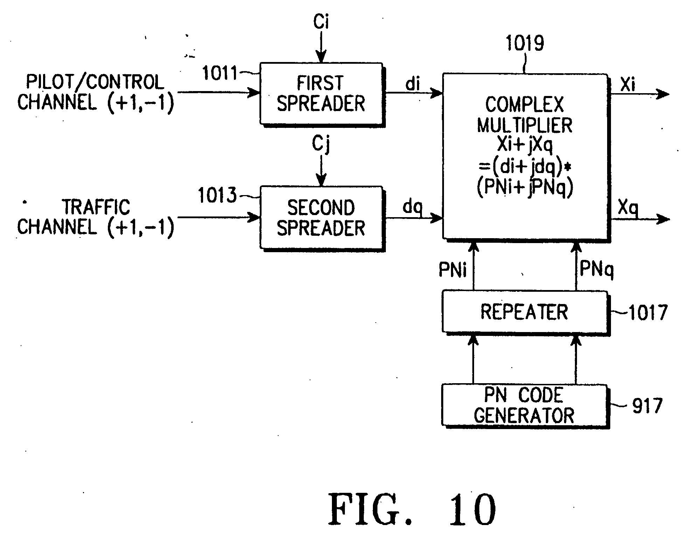

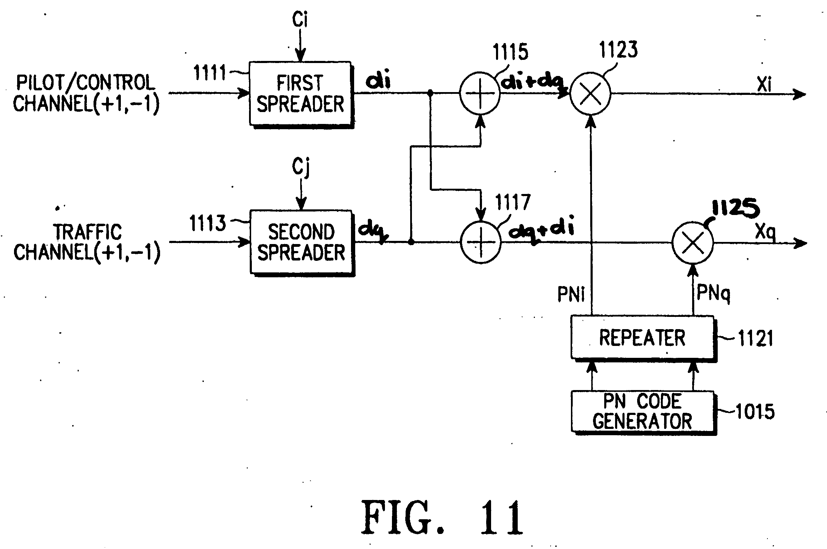

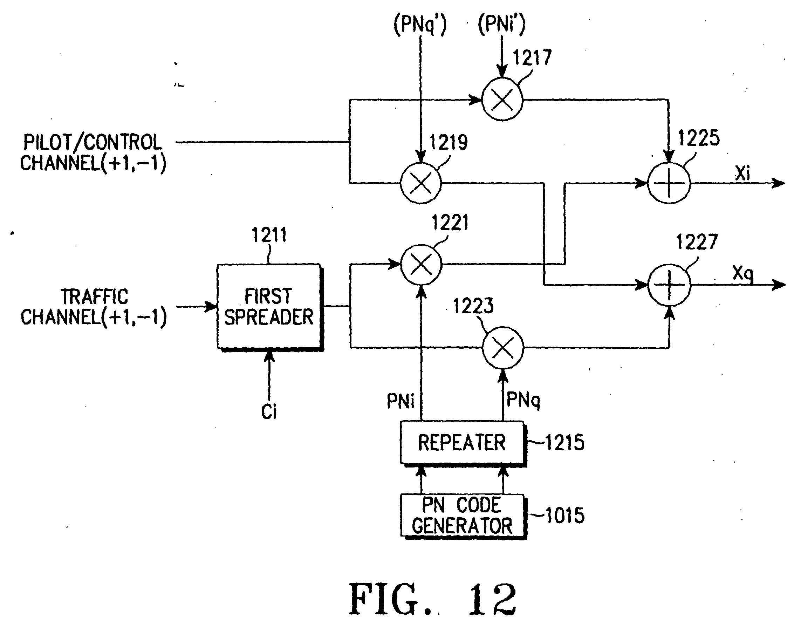

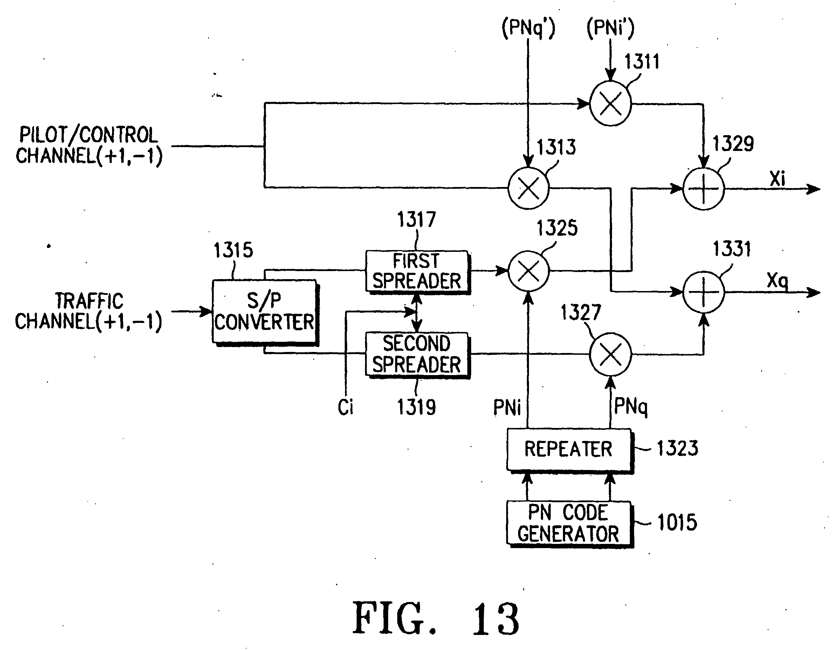

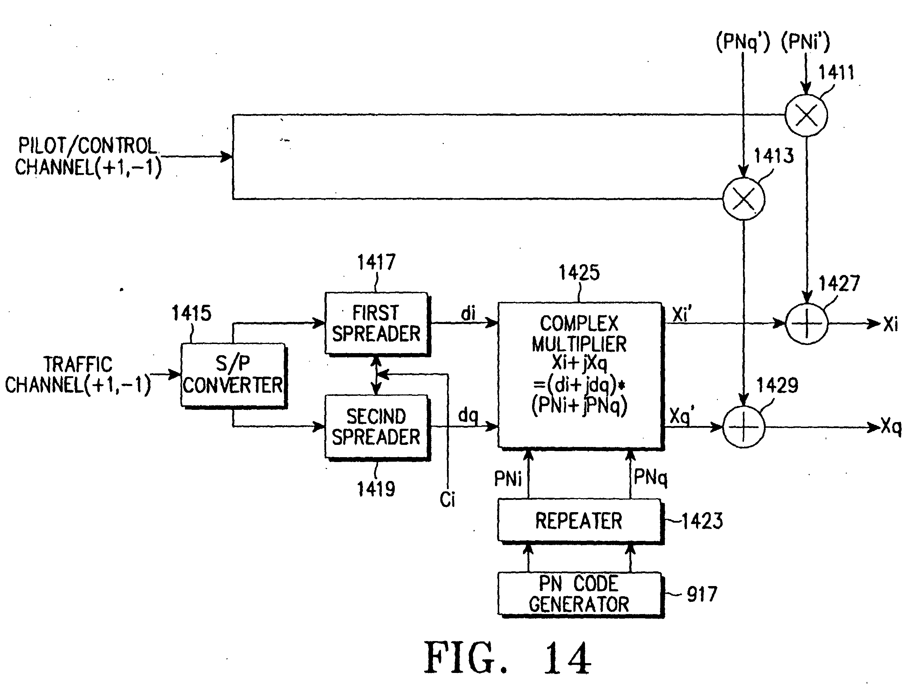

The reverse link MRPOC spreading and PN masking portion 919 can be modified in various ways. Figure 10 is a block diagram of the reverse link MRPOC spreading and PN masking portion 919 in which MRPOCs are applied to the pilot/control channel and the traffic channel and PN masking is performed by complex spreading. Figure 11 is a block diagram of the reverse MRPOC spreading and PN masking portion 919 in which MRPOCs are applied to the pilot/control channel and the traffic channel and no complex spreading is performed for PN masking. Figure 12 is a block diagram of a reverse link MRPOC spreading and PN masking portion 919 in which an MRPOC is applied only to the traffic channel and no complex spreading is performed for PN masking. Figure 13 is a block diagram of a reverse link MRPOC spreading and PN masking portion 919 in which odd-numbered and even-numbered bits are separated from the traffic channel, an MRPOC is applied to the odd-numbered and even-numbered bits, and no complex spreading is performed for PN masking. Figure 14 is a block diagram of a reverse MRPOC spreading and PN masking portion 919 in which odd-numbered and even-numbered bits are separated from the traffic channel, an MRPOC is applied to the odd-numbered and even numbered bits, and complex spreading is performed for PN masking.

Referring to figure 10, a first spreader 1011 multiplies an input pilot/control channel signal by an MRPOC, Ci, and outputs a spread signal di. A second spreader 1013 multiplies an input traffic channel signal by an MRPOC, Cj, and outputs a spread signal dq. A repeater 1017 repeats the PN codes, PNi and PNq, received from the PN code generator 917 at predetermined number of times. A complex multiplier 1019 complex multiplies the spread signals di and dq by the repeated PN codes, PNi and PNq, received from the repeater 1017 and generates PN masked signals Xi and Xq. The complex multiplier 1019 operates as in equation (1) for complex PN masking.

In figure 10, the MRPOCs, Ci and Cj, should be different from each other, which implies that the respective subcodes of the MRPOCs, Ci and Cj should be different. In this reverse link MRPOC spreading and PN masking portion 919, the pilot/channel and the traffic channel can concurrently arrive at a base station, and thus mutual interference can be removed. However, the number of available MRPOCs is reduced by half.

Referring to figure 11, a first spreader 1111 multiplies an input pilot/control channel signal by an MRPOC, Ci and outputs the spread signal di. A second spreader 1113 multiplies an input traffic channel signal by an MRPOC, Cj, and outputs the spread signal dq. An adder 1115 adds the spread signal di received from the first spreader 1111 and the spread signal dq received from the second spreader 1113, and generates a signal di+dq. An adder 1117 adds the signal dq and di and generates a signal dq+di. A repeater 1121 repeats the PN codes, PNi and PNq, received from the PN code generator 917 at predetermined number of times. A multiplier 1123 multiplies the spread signal di+dq received from the adder 1115 by the repeated PN code, Pni, received from the repeater 1121 and generates the PN masked signal Xi. A multiplier 1125 multiplies the spread signal dq+di received from the adder 1117 by the repeated PN code, PNq received from the repeater 1121 and generates the PN masked signal Xq.

In figure 11, the MRPOCs, Ci and Cj should be different from each other. In this reverse link MRPOC spreading and PN masking portion 919, the pilot/control channel and the traffic channel can concurrently arrive at a base station, and thus mutual interference can be removed. However, the number of available MRPOCs is reduced by half.

Referring to figure 12, an MRPOC spreader 1211 multiplies an input traffic channel signal by an MRPOC, Ci, and generates a spread signal. A repeater 1215 repeats the PN codes, PNi and PNq, received from the PN code generator 917 at predetermined number of times. A multiplier 1217 multiplies an input pilot/control channel signal by a PN code, Pni and a multiplier 1219 multiplies the input pilot/control channel signal by a PN code, PNq. A multiplier 1221 multiplies the spread signal received from the MRPOC spreader 1211 by the repeated PN code, Pni, received from the repeater 1215, and a multiplier 1223 multiplies the spread signal received from the MRPOC spreader 1211 by the repeated PN code, PNq, received from the repeater 1215. An adder 1225 adds the outputs of the multipliers 1217 and 1221 and generates the PN masked signal Xi, and an adder 1227 adds the outputs of the multipliers 1219 and 1223 and generates the PN masked signal Xq.

In figure 12, because an MRPOC is not applied to the pilot/control channel, there is no orthogonality between the pilot/control channel and the traffic channel. Thus, the channels are likely to suffer interference due to the PN codes.

In addition, the PN codes for spreading the pilot/traffic channel should be different from those for spreading the traffic channel, and users should be assigned different PN codes.

Referring to figure 13, a serial-to-parallel converter 1315 separately outputs even-numbered and odd-numbered bits of an input traffic channel signal. A first spreader 1317 multiplies the even-numbered bits received from the serial-to-parallel converter 1315 by an MRPOC, Ci and a second spreader 1319 multiplies the odd-numbered bits received from the serial-to-parallel converter 1315 by the MRPOC, Ci. A repeater 1323 repeats the PN codes, PNi and PNq received from the PN code generator 917 at predetermined number of times. A multiplier 1311 multiplies an input pilot/control channel signal by a PN code, PNi, and a multiplier 1313 multiplies the input pilot/control channel signal by the PN code, PNq'. A multiplier 1325 multiplies the spread signal received from the first spreader 1317 by a PN code, PNi', received from the repeater 1323, and a multiplier 1327 multiplies the spread signal received from the second spreader 1319 by a PN code, PNq, received from the repeater 1323. An adder 1329 adds the outputs of the multipliers 1331 and 1325 and outputs the PN masked signal Xi. An adder 1311 adds the outputs of the multipliers 1313 and 1327 and outputs the PN masked signal Xq.

In figure 13, the traffic channel data is divided into two branches by the serial-to-parallel converter 1315 and an MRPOC double the length of the original MRPOC is applied to each divided signal to increase the number of available MRPOCs. The traffic channel data is separated into even numbered data and odd numbered data by the serial-to-parallel converter 1315. Since the data transmission rate of the data in each branch is a half that at the input to the serial-to-parallel converter 1315, the length of the MRPOC should be doubled, and thus the number of the MRPOCs is generally doubled. Therefore, the number of the available MRPOCs is twice that for the structures of figures 11 and 12. An identical MRPOC is applied to the even numbered and odd numbered data of the traffic channel. The respective spread signals forms a real part and an imaginary part after PN masking, and are added to spread real and imaginary parts of the pilot/control channel, respectively.

Referring to figure 14, a serial-to-parallel converter 1415 separately outputs even numbered and odd numbered bits of an input traffic channel signal. A first spreader 1417 multiplies the even numbered bits received from the serial-to-parallel converter 1415 by an MRPOC, Ci, to produce spread signal di. A second spreader 1419 multiplies the odd numbered bits received from the serial-to-parallel converter 1415 by the MRPOC, Ci to produce spread signal dq. A repeater 1423 repeats the PN codes, PNi and PNq received from the PN code generator 917 at predetermined number of times. A multiplier 1411 multiplies an input pilot/control channel signal by a PN code, PNi', and a multiplier 1413 multiplies the input pilot/control channel signal by the PN code, PNq'. A complex multiplier 1425 complex multiplies the spread signals di and dq received from the first and second spreaders 1417 and 1419 by the PN codes, PNi and PNq received from the repeater 1423 as per in equation (1). An adder 1427 adds the output of the multiplier 1411 and the spread signal Xi' received from the complex multiplier 1425 and outputs the PN masked signal Xi. An adder 1429 adds the output of the multiplier 1413 and the spread signal Xq' received from the complex multiplier 1425 and outputs the PN masked signal Xq.

The method of figure 14 is similar to that of figure 13 except that complex spreading is performed for PN masking of the traffic channel to make the strengths of the spread real and imaginary signals equal.

The structures of the reverse link MRPOC spreading and PN masking portion 919 shown in figures 10 to 14 should be designed to be applicable to a cellular mobile communications system. As base stations cannot be differentiated with a single MRPOC set, the number of MRPOC sets preferably should be equal to the number of base stations or a reuse factor. However, it may not be practical to make so many sets of codes and thus there is a need for a method of making another MRPOC set given an existing MRPOC set. For this purpose, the PN masking is used.

When every base station uses a different PN code in the cellular mobile communications system, an MRPOC set can be commonly applied to base stations in such a way that the base stations in effect use different MRPOCs. In this case, the MRPOC sets mutually serve as PN codes and thus the intensity of an interference signal is proportional to the length of the PN codes. Yet, mutual orthogonality is maintained among elements of an MRPOC set. As a result, PN masking for differentiating MRPOC sets allows the development if as many MRPOC sets as there are base stations.

There will hereinbelow be given a description of a forward MRPOC spreading and PN masking portion.

Spectrum spreading and discrimination among users or channels are implemented using an orthogonal code on a forward link in a CDMA mobile communications system of IS-95 or any other standard. Since all channels can be synchronised with a base station on a forward link, a transmission signal from the base station can be demodulated by a specific terminal without interference from a signal transmitted from the base station to a different terminal, only if the transmission is conducted via a single path channel on the forward link. However, if signals are transmitted from the base station on multipath channels, an interference signal is generated by a signal from the base station to a different terminal.

Accordingly, application of MRPOCs to the forward link contributes to reduction of an interference signal caused by multipath propagation, thereby reducing the operational signal strength point of the forward link. As a result, system capacity is increased.

Then, the number of available MRPOCs should be increased. This can be achieved by the same method as that for the reverse link. That is, a serial-to-parallel converter separately outputs odd-numbered data and even numbered data of traffic channel data, each at half the data rate of the input traffic channel data, and each separated signal is spread twice, so that the number of available MRPOCs is doubled and an MRPOC induced system capacity increase can be realised.

According to the present invention as described above, the loss of orthogonality caused by a multipath propagation signal component in a spread spectrum method using a Walsh code is prevented by spreading a signal with an MRPOC in a transmitter of a mobile communications system.

While the present invention has been described in detail with reference to the specific embodiments, they are mere exemplary applications. Thus, it is to be clearly understood that many variations can be made by anyone skilled in the art within the scope of the present invention.

**Claims**

1. A pseudo-orthogonal code generating method for use in orthogonally spreading channel data in a Code Division Multiple Access (CDMA) communication system, comprising:

    selecting M orthogonal codes from N orthogonal codes, M and N being integers;
    interlacing the elements of the selected M orthogonal codes;
    generating a pseudo-orthogonal code using the interlaced elements whereby the pseudo-orthogonal code is represented as a sequence of MxN elements.

2. A method as claimed in claim 1, wherein the step of interlacing comprises the steps of

    arranging the selected orthogonal codes in a matrix of M rows by N columns; and
    outputting the elements of the orthogonal codes from the matrix by columns.

3. A method as claimed in either of claims 1 or 2, wherein the orthogonal codes are Walsh codes.

4. A method as claimed in any preceding claim, wherein the input channel data is a traffic data.

5. A method as claimed in any preceding claim, wherein M is 2.

6. A method as claimed in any preceding claim, further comprising the step of

    multiplexing, using a multiplexer, input channel data to produce M-branch parallel data;
    spreading, using a plurality of spreaders, the multiplexed M-branch parallel data; and
    demultiplexing, using a demultiplexer, the parallel spread data to produce serial data.

7. A spread spectrum method using a pseudo-orthogonal code in a CDMA communication system, the method comprising the steps of

    converting, using a signal converter, at least one input channel data bit stream into a converted signal;
    generating a pseudo-orthogonal code which is a combination of M different orthogonal codes using a pseudo-orthogonal code generating method as claimed in any of claims 1 to 6,
    generating, using a PN code generator, a PN code comprising real and imaginary component parts;
    pseudo-orthogonal code spreading and PN masking, using a pseudo-orthogonal code spreading and masking portion, by dividing the converted signal into M signal sequences, multiplying each signal sequence by the pseudo-orthogonal code, generating MxN sequences; and multiplying each spread signal sequence by a PN code for PN masking; and
    baseband filtering, using a baseband filter, the output of the pseudo-orthogonal code spreading and masking portion to produce a filtered signal; and shifting, using a frequency shifter, the frequency of the filtered signal.

8. A method as claimed in claim 7, wherein the step of pseudo-orthogonal code spreading and PN masking comprises the steps of

    converting, using a pseudo-orthogonal code spreader, the converted signal into M parallel signal sequences, multiplying each signal sequences by the pseudo-orthogonal code, generating MxN spread signal sequences, spreading the M signal, sequences, and converting the M spread signal sequences to a serial sequence;
repeating, using a repeater, M times the real component of the PN code and the imaginary component of the PN code received from the PN code generator;
multiplying, using a first multiplier, the output of the pseudo-orthogonal code spreader by the real component of the PN code received from the repeater for PN masking the real component of a real part signal; and
multiplying, using a second multiplier, the output of the pseudo-orthogonal code spreader by the imaginary component of the PN code received from the repeater for PN masking of an imaginary part signal.

9. A method as claimed in either of claims 7 or 8, further comprising the step of

separating, using a serial to parallel converter, even-numbered and odd-numbered bits from the converted signal;
converting, using a first pseudo-orthogonal code spreader, the even-numbered bit signal to M parallel signal sequences, multiplying eadh signal sequence by the pseudo-orthogonal code, generating MxN spread signal sequences, spreading the M signal sequences and converting the M spread signal sequences to a serial sequence; and
converting, using a second pseudo-orthogonal code spreader, the odd-numbered bit signal to M parallel signal sequences, multiplying each signal sequence by the pseudo-orthogonal code, generating MxN spread signal sequences, spreading the M signal sequences and converting the M spread signal sequences to a serial sequence.

10. A method as claimed in any of claim 7 to 9, further comprising the steps of

dividing input channel data, using a serial-to-parallel converter, of a transmission rate of K into M signal sequences each having a transmission rate of K/M, K being an integer; and wherein the step of multiplying comprises
multiplying, using a plurality of multipliers, the M signal sequences by M different orthogonal, preferably Walsh, codes each having a length of N and generating spread signals in a matrix of $a_iW_{ij}$, where $a_i$ is a divided signal sequence and $W_{ij}$ is an element of each orthogonal, preferably Walsh, code;
converting, using a serial-to-parallel converter, the spread spectrum signals in the form a matrix to serial data of a transmission rate of K;
multiplying, using a first multiplier, the serial data by the real PN code component for PN masking; and
multiplying, using a second multiplier, the serial data by the imaginary PN code component for PN masking.

11. A method as claimed in any of claim 7 to 9, further comprising the steps of

dividing input channel data, using a serial-to-parallel converter, of a transmission rate of K into M signal sequences each having a transmission rate of K/M; and wherein the step of multiplying comprises
multiplying, using a plurality of multipliers, the M signal sequences by M different orthogonal, preferably Walsh, codes each having a length of N and generating spread signals in a matrix of $a_iW_{ij}$, where $a_i$ is a divided signal sequence and $W_{ij}$ is an element of each orthogonal, preferably Walsh, code;
converting, using a serial-to-parallel converter, the spread spectrum signals in the form a matrix to serial data of a transmission rate of K;
complex-multiplying, using a complex multiplier, the serial data by the real and imaginary PN code components.

12. A method as claimed in any of claim 7 to 11, wherein the step of converting, using a signal converter, an input channel data bit stream into a converted signal comprises the steps of converting, using signal converter, 0s and 1s of the at least one input channel data bit stream into corresponding +1s and -1s respectively.

13. A pseudo-orthogonal code generating device (413) for spreading channel data in a CDMA communication system, the device comprising

means for selecting M orthogonal codes from N orthogonal codes, M and N being integers;
means for interlacing the elements of the selected M orthogonal codes; and
means for generating a pseudo-orthogonal code using the interlaced elements whereby the pseudo-orthogonal code is represented as a sequence of MxN elements.

14. A device as claimed in claim 13, wherein the means for interlacing comprises

means for arranging the selected orthogonal codes in a matrix of M rows by N columns; and
means for outputting the elements of the orthogonal codes from the matrix by columns.

15. A device as claimed in either of claims 13 or 14, wherein the orthogonal codes are Walsh codes.

16. A device as claimed in any of claims 13 to 15, wherein the channel data is a traffic data channel.

17. A device as claimed in any of claims 13 to 16, wherein M is 2.

18. A device as claimed in any of claims 13 to 17, further comprising

means for multiplexing, using a multiplexer, input channel data to produce M-branch parallel data;
means for spreading, using a plurality of spreaders, the multiplexed M-branch parallel data; and
means for demultiplexing, using a demultiplexer, the parallel spread data to produce serial data.

19. A spread spectrum device adapted to use a pseudo-orthogonal code, for use in a CDMA communication system, the device comprising

a signal converter (411) for converting an input channel data bit stream into a converted signal;
a pseudo-orthogonal code generator (413) for generating a pseudo-orthogonal code which is a combination of M different orthogonal codes comprising a pseudo-orthogonal code generating device as claimed in any of claims 13 to 18,
a PN code generator (415) for generating a PN code comprising real and imaginary component parts;
a pseudo-orthogonal code spreading and masking portion (417) for dividing the converted signal into M signal sequences, multiplying each signal sequence by the pseudo-orthogonal code, generating MxN sequences; and multiplying each spread signal sequence by a PN code for PN masking; and
a baseband filter (418) for baseband filtering the output of the pseudo-orthogonal code spreading and masking portion to produce a filtered signal; and a frequency shifter (421) for shifting the frequency of the filtered signal.

20. A device as claimed in claim 19, wherein the pseudo-orthogonal code spreading and PN masking portion comprises

a pseudo-orthogonal code spreader for converting the converted signal into M parallel signal sequences, multiplying each signal sequences by the pseudo-orthogonal code, generating MxN spread signal sequences, spreading the N signal sequences, and converting the M spread signal sequences to a serial sequence;
a repeater for repeating M times the real component of the PN code and the imaginary component of the PN code received from the PN code generator;
a first multiplier for multiplying the output of the pseudo-orthogonal code spreader by the real component of the PN code received from the repeater for PN masking the real component of a real part signal; and
a second multiplier for multiplying the output of the pseudo-orthogonal code spreader by the imaginary component of the PN code received from the repeater for PN masking of an imaginary part signal.

21. A device as claimed in either of claims 19 or 20, further comprising

a serial-to-parallel converter for separating even-numbered and odd-numbered bits from the converted signal;
a first pseudo-orthogonal code spreader for converting the even-numbered bit signal to M parallel signal sequences, multiplying each signal sequence by the pseudo-orthogonal code, generating MxN spread signal sequences, spreading the M signal sequences and converting the M spread signal sequences to a serial sequence; and
a second pseudo-orthogonal code spreader for converting the odd-numbered bit signal to M parallel signal sequences, multiplying each signal sequence by the pseudo-orthogonal code, generating MxN spread signal sequences, spreading the N signal sequences and converting the M spread signal sequences to a serial sequence.

22. A device as claimed in any of claim 19 to 21, further comprising

a serial to parallel converter for dividing input channel data of a transmission rate of K into M signal sequences each having a transmission rate of K/M, K being an integer; and wherein the means for multiplying comprises a plurality of multipliers for multiplying the M signal sequences by M different orthogonal, preferably Walsh, codes each having a length of N and generating spread signals in a matrix of $a_iW_{ij}$, where $a_i$ is a divided signal sequence and $W_{ij}$ is an element of each orthogonal, preferably Walsh, code;
a serial-to-parallel converter for converting the spread spectrum signals in the form a matrix to serial data of a transmission rate of K;
a first multiplier for multiplying the serial data by the real PN code component for PN masking; and
a second multiplier for multiplying the serial data by the imaginary PN code component for PN masking.

**23.** A device as claimed in any of claim 19 to 21, further comprising

a serial to parallel converter for dividing input channel data of a transmission rate of K into M signal sequences each having a transmission rate of K/M; and wherein the means for multiplying comprises
a plurality of multipliers for multiplying the M signal sequences by M different orthogonal, preferably Walsh, codes each having a length of N and generating spread signals in a matrix of $a_iw_{ij}$, where $a_i$ is a divided signal sequence and $W_{ij}$ is an element of each orthogonal, preferably Walsh, code;
a serial to parallel converter for converting the spread spectrum signals in the form a matrix to serial data of a transmission rate of K;
a complex multiplier for complex-multiplying the serial data by the real and imaginary PN code components.

**24.** A device as claimed in any of claim 19 to 23, wherein the signal converter for converting an input channel data bit stream into a converted signal comprises
a signal converter for converting Os and 1s of the at least one input channel data bit stream into corresponding +1s and -1s respectively.

**Patentansprüche**

**1.** Pseudo-orthogonales Codeerzeugungsverfahren für die Verwendung beim orthogonalen Spreizen von Kanaldaten in einem CDMA (Code Division Multiple Access)-Kommunikationssystem, wobei das Verfahren folgende Schritte umfasst:

Auswählen von M orthogonalen Codes aus N orthogonalen Codes, wobei M und N jeweils Ganzzahlen sind,

Verschachteln der Elemente der ausgewählten M orthogonalen Codes,

Erzeugen eines pseudo-orthogonalen Codes unter Verwendung der verschachtelten Elemente, wobei der pseudo-orthogonale Code als eine Sequenz von MxN Elementen wiedergegeben wird.

**2.** Verfahren nach Anspruch 1. wobei der Schritt zum Verschachteln die folgenden Schritte umfasst:

Anordnen der ausgewählten orthogonalen Codes in einer Matrix aus M Reihen mal N Spalten, und

Ausgeben der Elemente der orthogonalen Codes aus der Matrix durch Spalten.

**3.** Verfahren nach Anspruch 1 oder 2, wobei die orthogonalen Codes Walsh-Codes sind.

**4.** Verfahren nach einem der vorstehenden Ansprüche, wobei die Eingangskanaldaten Verkehrsdaten sind.

**5.** Verfahren nach einem der vorstehenden Ansprüche, wobei M gleich 2 ist.

**6.** Verfahren nach einem der vorstehenden Ansprüche, das weiterhin die folgenden Schritte aufweist:

Multiplexen, unter Verwendung eines Multiplexers, von Eingangskanaldaten, um M-Zwei-Paralleldaten zu erzeugen,

Spreizen, unter Verwendung von Spreizem, der gemultiplexten M-Zweig-Paralleldaten, und

Demultiplexen, unter Verwendung eines Demultiplexers, der parallelen gespreizten Daten, um serielle Daten zu erzeugen.

7. Spreizspektrumverfahren unter Verwendung eines pseudo-orthogonalen Codes in einem CDMA-Kommunikationssystem, wobei das Verfahren die folgenden Schritte umfasst:

Wandeln, unter Verwendung eines Signalwandlers, von wenigstens einem Eingangskanaldatenbitstrom zu einem gewandelten Signal,

Erzeugen eines pseudo-orthogonalen Codes, der eine Kombination aus M verschiedenen orthogonalen Codes ist, unter Verwendung eines Verfahrens zum Erzeugen eines pseudo-orthogonalen Codes nach einem der Ansprüche 1 bis 6,

Erzeugen, unter Verwendung eines PN-Codeerzeugers, eines PN-Codes, der reale und imaginäre Komponententeile umfasst,

Spreizen des pseudo-orthogonalen Codes und PN-Maskieren unter Verwendung eines Pseudo-orthogonat-Spreiz- und Maskierteils durch das Teilen des gewandelten Signals in M Signalsequenzen, das Multiplizieren jeder Signalsequenz mit dem pseudo-orthogonalen Code, das Erzeugen von MxN Sequenzen und das Multiplizieren jeder gespreizten Signalsequenz mit einem PN-Code für die PN-Maskierung, und

Basisband-Filtem, unter Verwendung eines Basisband-Filters, der Ausgabe aus dem Pseudo-orthogonal-Spreiz- und Maskierteil, um ein gefiltertes Signal zu erzeugen, und Verschieben unter Verwendung eines Frequenzverschiebers der Frequenz des gefilterten Signals.

8. Verfahren nach Anspruch 7, wobei der Schritt zum Spreizen des pseudo-orthogonalen Codes und zum PN-Maskieren die folgenden Schritte umfasst:

Wandeln, unter Verwendung eines pseudo-orthogonalen Code-Spreizers, des gewandelten Signals zu M parallelen Signalsequenzen, Multiplizieren jeder der Signalsequenzen mit dem pseudo-orthogonalen Code, Erzeugen von MxN gespreizten Signalsequenzen, Spreizen der M Signalsequenzen und Wandeln der M gespreizten Signalsequenzen zu einer seriellen Sequenz,

Wiederholen, unter Verwendung eines Wiederholers, M Mal die reale Komponente des PN-Codes und die imaginäre Komponente des PN-Codes aus dem PN-Coderrzeuger,

Multiplizieren, unter Verwendung eines ersten Multiplizierers, der Ausgabe aus dem pseudo-orthogonalen Codespreizer mit der realen Komponente des PN-Codes aus dem Wiederholer zum PN-Maskieren der realen Komponente eines realen Teilsignals, und

Multiplizieren, unter Verwendung eines zweiten Multiplizierers, der Ausgabe aus dem pseudo-orthogonalen Codespreizer mit der imaginären Komponente des PN-Codes aus dem Wiederholer zum PN-Maskieren eines imaginären Teilsignals.

9. Verfahren nach Anspruch 7 oder 8, das weiterhin die folgenden Schritte umfasst:

Trennen, unter Verwendung eines Seriell-Parallel-Wandlers, der gerade nummerierten und ungerade nummerierten Bits aus dem gewandelten Signal,

Wandeln, unter Verwendung eines ersten pseudo-orthogonalen Codespreizers, des gerade nummerierten Bitsignals zu M parallelen Signalsequenzen, Multiplizieren jeder Signalsequenz mit dem pseudo-orthogonalen Code, Erzeugen von MxN gespreizten Signalsequenzen, Spreizen der M Signalsequenzen und Wandeln der M gespreizten Signalsequenzen zu einer seriellen Sequenz, und

Wandeln, unter Verwendung eines zweiten pseudo-orthogonalen Codespreizers, des ungerade nummerierten Bitsignals zu M parallelen Signalsequenzen, Multiplizieren jeder Signalsequenz mit dem pseudo-orthogonalen Code. Erzeugen der MxN gespreizten Signalsequenzen, Spreizen der M Signalsequenzen und Wandeln der M gespreizten Signalsequenzen zu einer seriellen Sequenz.

10. Verfahren nach einem der Ansprüche 7 bis 9, das weiterhin den folgenden Schritt umfasst:

Teilen, unter Verwendung eines Seriell-Parallel-Wandlers, der Eingangskanaldaten mit einer Übertragungsrate K in M Signalsequenzen, die jeweils eine Übertragungsrate K/M aufweisen, wobei K eine Ganzzahl ist und wobei der Schritt zum Multiplizieren die folgenden Schritte umfasst:

Multiplizieren, unter Verwendung einer Vielzahl von Multiplizierern, der M Signalsequenzen mit M verschiedenen orthogonalen und vorzugsweise Walsh-Codes, die jeweils eine Länge von N aufweisen, und Erzeugen von Spreizsignalen in einer Matrix von $a_i W_{ij}$, wobei $a_i$ eine geteilte Signalsequenz ist und $W_{ij}$ ein Element jedes orthogonalen und vorzugsweise Walsh-Codes ist,

Wandeln, unter Verwendung eines Seriell-Parallel-Wandlers, der Spreizspektrumsignale in der Form einer Matrix zu seriellen Daten mit einer Übertragungsrate K,

Multiplizieren, unter Verwendung eines ersten Multiplizierers, der seriellen Daten mit der malen PN-Code-Komponente zum PN-Maskieren, und

Multiplizieren, unter Verwendung eines zweiten Multiplizierers, der seriellen Daten mit der imaginären PN-Code-Komponente zum PN-Maskieren.

**11.** Verfahren nach einem der Ansprüche 7 bis 9, das weiterhin den folgenden Schritt aufweist:

Teilen, unter Verwendung eines Seriell-Parallel-Wandlers, der Eingangskanaldaten mit einer Übertragungsrate K in M Signalsequenzen, die jeweils eine Übertragungsrate von K/M aufweisen, wobei der Schritt zum Multiplizieren die folgenden Schritte umfasst:

Multiplizieren, unter Verwendung einer Vielzahl von Multiplizierern, der M Signalsequenzen mit M verschiedenen orthogonalen und vorzugsweise Walsh-Codes, die jeweils eine Länge von N aufweisen, und Erzeugen von Spreizsignalen in einer Matrix von $a_i W_{ij}$, wobei $a_i$ eine geteilte Signalsequenz ist und $W_{ij}$ ein Element jedes orthogonalen und vorzugsweise Walsh-Codes ist,

Wandeln, unter Verwendung eines Seriell-Parallel-Wandlers, der Spreizspektrumsignals in der Form einer Matrix zu seriellen Daten mit einer Übertragungsrate K,

Komplex-Multiplizieren unter Verwendung eines ersten Komplex-Multiplizierers der seriellen Daten mit den realen und imaginären PN-Code-Komponenten.

**12.** Verfahren nach einem der Ansprüche 7 bis 11, wobei der Schritt zum Wandeln, unter Verwendung eines Signalwandlers, eines Eingangskanaldatenbitstroms zu einem gewandelten Signal einen Schritt zum Wandeln, unter Verwendung eines Signalwandlers, der 0-en und 1-en des wenigstens einen Eingangskanaldatenbitstroms zu entsprechenden +1-en und -1en umfasst.

**13.** Pseudo-orthogonale Codeerzeugungsvorrichtung (413) zum Spreizen von Kanaldaten in einem CDMA-Kommunikationssystem, wobei die Vorrichtung umfasst:

eine Einrichtung zum Wählen von M orthogonalen Codes aus N orthogonalen Codes, wobei M und N jeweils Ganzzahlen sind,

eine Einrichtung zum Verschachteln der Elemente der ausgewählten M orthogonalen Codes, und

eine Einrichtung zum Erzeugen eines pseudo-orthogonalen Codes unter Verwendung der verschachtelten Elemente, wobei der pseudo-orthogonale Code als eine Sequenz von MxN Elementen wiedergegeben wird.

**14.** Vorrichtung nach Anspruch 13, wobei die Einrichtung zum Verschachteln umfasst:

eine Einrichtung zum Anordnen der ausgewählten orthogonalen Codes in einer Matrix aus M Reihen mal N Spalten, und

eine Einrichtung zum Ausgeben der Elemente der orthogonalen Codes aus der Matrix nach Spalten.

**15.** Vorrichtung nach Anspruch 13 oder 14, wobei die orthogonalen Codes Walsh-Codes sind.

**16.** Vorrichtung nach einem der Ansprüche 13 bis 15, wobei die Kanaldaten Verkehrskanaldaten sind.

**17.** Vorrichtung nach einem der Ansprüche 13 bis 16, wobei M gleich 2 ist.

**18.** Vorrichtung nach einem der Ansprüche 13 bis 17, die weiterhin umfasst:

eine Einrichtung zum Multiplexen, unter Verwendung eines Multiplexers, der Eingangskanaldaten, um M-Zweig-Paralleldaten zu erzeugen.

eine Einrichtung zum Spreizen, unter Verwendung einer Vielzahl von Spreizem, der gemultiplexten M-Zweig-Paralleldaten, und

einer Einrichtung zum Demultiplexen, unter Verwendung eines Demultiplexers, der parallelen gespreizten Daten, um serielle Daten zu erzeugen.

**19.** Spreizspektrum-Vorrichtung für die Verwendung eines pseudo-orthogonalen Codes in einem CDMA-Kommunikationssystem, wobei die Vorrichtung umfasst:

einen Signalwandler (411) zum Wandeln eines Eingangskanaldatenbitstroms zu einem gewandelten Signal,

einen pseudo-orthogonalen Codeerzeuger (413) zum Erzeugen eines pseudo-orthogonalen Codes, der eine Kombination aus M verschiedenen orthogonalen Codes ist, einschließlich einer pseudo-orthogonalen Codeerzeugungseinrichtung nach einem der Ansprüche 13 bis 18,

einen PN-Codeerzeuger (415) zum Erzeugen eines PN-Codes, der reale und imaginäre Komponententeile umfasst,

einen Pseudo-orthogonal-Codespreiz- und Maskierteil (417) zum Teilen des gewandelten Signals in M Signalsequenzen, Multiplizieren jeder Signalsequenz mit dem pseudo-orthogonalen Code, Erzeugen von MxN Sequenzen und Multiplizieren jeder gespreizten Signalsequenz mit einem PN-Code zur PN-Maskierung, und

einen Basisband-Filter (419) zum Basisband-Filtern der Ausgabe aus dem Pseudo-orthogonal-Codespreiz- und Maskierteil, um ein gefiltertes Signal zu erzeugen, und

einen Frequenzverschieber (421) zum Verschieben der Frequenz des gefilterten Signals.

**20.** Vorrichtung nach Anspruch 19, wobei der Pseudo-orthogonal-Codespreiz- und PN-Maskierteil umfasst:

einen pseudo-orthogonalen Codespreizer zum Wandeln des gewandelten Signals zu M parallelen Signalsequenzen, Multiplizieren jeder Signalsequenz mit dem pseudo-orthogonalen Code, Erzeugen von MxN gespreizten Signalsequenzen, Spreizen der N Signalsequenzen und Wandeln der M gespreizten Signalsequenzen zu einer seriellen Sequenz,

einen Wiederholer zum Wiederholen M Mal der realen Komponente des PN-Codes und der imaginären Komponente des PN-Codes aus dem PN-Codeerzeuger,

einem ersten Multiplizierer zum Multiplizieren der Ausgabe des pseudo-orthagonalen Codespreizers mit der realen Komponente des PN-Codes aus dem Wiederholer zum PN-Maskieren der realen Komponente eines realen Teilsignals, und

einem zweiten Multiplizierer zum Multiplizieren der Ausgabe des pseudo-orthogonalen Codespreizers mit der imaginären Komponente des PN-Codes aus dem Wiederholer zum PN-Maskieren eines imaginären Teilsignals.

**21.** Vorrichtung nach einem der Ansprüche 19 oder 20, die weiterhin umfasst

einen Seriell-Parallel-Wandler zum Trennen der gerade nummerierte und ungerade nummerierten Bits aus dem gewandelten Signal,

einen ersten pseudo-orthogonalen Codespreizer zum Wandeln des gerade nummerierten Bitsignals zu M parallelen Signalsequenzen, Multiplizieren jeder Signalsequenz mit dem pseudo-orthogonalen Code, Erzeugen von MxN gespreizten Signalsequenzen, Spreizen der M Signalsequenzen und Wandeln der M gespreizten Signalsequenzen zu einer seriellen Sequenz, und

einem zweiten pseudo-orthogonalen Codespreizer zum Wandeln des ungerade nummerierten Bitsignals zu M parallelen Signalsequenzen, Multiplizieren jeder Signalsequenz mit dem pseudo-orthogonalen Code, Erzeugen von MxN gespreizten Signalsequenzen, Spreizen der N Signalsequenzen und Wandeln der M gespreizten Signalsequenzen zu einer seriellen Sequenz.

**22.** Vorrichtung nach einem der Ansprüche 19 bis 21, die weiterhin umfasst:

einen Seriell-Parallel-Wandler zum Teilen der Eingangskanaldaten mit einer Übertragungsrate K in M Signalsequenzen, die jeweils eine Übertragungsrate K/M aufweisen, wobei K eine Ganzzahl ist und wobei die Einrichtung zum Multiplizieren umfasst:

eine Vielzahl von Multiplizierem zum Multiplizieren der M Signalsequenzen mit M verschiedenen orthogonalen und vorzugsweise Walsh-Codes mit jeweils einer Länge von N und zum Erzeugen von Spreizsignalen in einer Matrix von $a_i W_{ij}$, wobei $a_i$ eine geteilte Signalsequenz ist und $W_{ij}$ ein Element jedes orthogonalen und vorzugsweise Walsh-Codes ist,

einen Seriell-Parallel-Wandler zum Wandeln der Spreizspektrumsignale in der Form einer Matrix zu seriellen Daten mit einer Übertragungsrate K,

einen ersten Multiplizierer zum Multiplizieren der seriellen Daten mit der realen PN-Codekomponente zum PN-Maskieren, und

einen zweiten Multiplizierer zum Multiplizieren der seriellen Daten mit der imaginären PN-Codekomponente zum PN-Maskieren.

**23.** Vorrichtung nach einem der Ansprüche 19 bis 21, die weiterhin umfasst:

einen Seriell-Parallel-Wandler zum Teilen der Eingangskanaldaten mit einer Übertragungsrate K in M Signalsequenzen, die jeweils eine Übertragungsrate K/M aufwiesen, wobei die Einrichtung zum Multiplizieren umfasst:

eine Vielzahl von Multiplizierern zum Multiplizieren der M Signalsequenzen mit M verschiedenen orthogonalen und vorzugsweise Walsh-Codes, die jeweils eine Länge von N aufweisen, und zum Erzeugen von Spreizsignalen in einer Matrix von $a_i W_{ij}$, wobei $a_i$ eine geteilte Signalsequenz ist und $W_{ij}$ ein Element jedes orthogonalen und vorzugsweise Walsh-Codes ist,

einen Seriell-Parallel-Wandler zum Wandeln der Spreizspektrumsignale in der Form einer Matrix zu seriellen Daten mit einer Übertragungsrate K,

einen komplexen Multiplizierer zum Komplex-Multiplizieren der seriellen Daten mit den realen und imaginären PN-Codekomponenten.

**24.** Vorrichtung nach Anspruch 19 bis 23, wobei der Signalwandler zum Wandeln eines Eingangskanaldatenbitstroms zu einem gewandelten Signal umfasst:

einen Signalwandler zum Wandeln der 0-en und 1-en des wenigstens einen Eingangskanaldatenbitstroms jeweils zu entsprechenden +1-en und -1-en.

**Revendications**

1. Procédé de production de code pseudo-orthogonal pour utilisation dans l'étalement orthogonal de données de voie dans un système de télécommunications à accès multiple par répartition de code (AMDC), comprenant :

   le choix de M codes orthogonaux à partir de N codes orthogonaux, M et N étant des nombres entiers ;
   l'entrelacement des éléments des M codes orthogonaux choisis ;
   la production d'un code pseudo-orthogonal en utilisant les éléments entrelacés, le code pseudo-orthogonal étant ainsi représenté comme une séquence de M×N éléments.

2. Procédé tel que revendiqué dans la revendication 1, dans lequel l'étape d'entrelacement comprend les étapes :

   d'arrangement des codes orthogonaux choisis en une matrice de M rangées par N colonnes ; et
   de sortie, par colonnes, des éléments des codes orthogonaux de la matrice.

3. Procédé tel que revendiqué dans l'une ou l'autre des revendications 1 ou 2, dans lequel les codes orthogonaux sont des codes de Walsh.

4. Procédé tel que revendiqué dans l'une quelconque des revendications précédentes, dans lequel les données de voie d'entrée sont des données de trafic.

5. Procédé tel que revendiqué dans l'une quelconque des revendications précédentes, dans lequel M est égal à 2.

6. Procédé tel que revendiqué dans l'une quelconque des revendications précédentes, comprenant en outre les étapes :

   de multiplexage, en utilisant un multiplexeur, des données de voie d'entrée pour produire M branches parallèles de données ;
   d'étalement, en utilisant une pluralité d'étaleurs, des M branches parallèles multiplexées de données ; et
   de démultiplexage, en utilisant un démultiplexeur, des données étalées parallèles pour produire des données série.

7. Procédé d'étalement de spectre utilisant un code pseudo-orthogonal dans un système de télécommunications à AMDC, le procédé comprenant les étapes :

   de conversion, en utilisant un convertisseur de signal, d'au moins un flux de bits de données de voie d'entrée en un signal converti ;
   de production d'un code pseudo-orthogonal qui est une combinaison de M codes orthogonaux différents en utilisant un procédé de production de code pseudo-orthogonal tel que revendiqué dans l'une quelconque des revendications 1 à 6 ;
   de production, en utilisant un générateur de code de PN (bruit pseudo-aléatoire), d'un code de PN comprenant des parties composantes réelle et imaginaire ;
   d'étalement de code pseudo-orthogonal et de masquage du PN, en utilisant une section d'étalement de code pseudo-orthogonal et de masquage, en divisant le signal converti en M séquences de signal, en multipliant chaque séquence de signal par le code pseudo-orthogonal, en produisant M×N séquences ; et en multipliant chaque séquence étalée de signal par un code de PN pour masquage de PN ; et
   de filtrage en bande de base, en utilisant un filtre en bande de base, de la sortie de la section d'étalement de code pseudo-orthogonal et de masquage pour produire un signal filtré ; et de décalage, en utilisant un décaleur de fréquence, de la fréquence du signal filtré.

8. Procédé tel que revendiqué dans la revendication 7, dans lequel l'étape d'étalement de code pseudo-orthogonal et de masquage de PN comprend les étapes :

   de conversion, en utilisant un étaleur de code pseudo-orthogonal, du signal converti en M séquences parallèles de signal, de multiplication de chaque séquence de signal par le code pseudo-orthogonal, de production de M×N séquences étalées de signal, d'étalement des M séquences de signal, et de conversion des M séquences étalées de signal en une séquence série ;
   de répétition, en utilisant un répéteur, M fois de la composante réelle du code de PN et de la composante imaginaire du code de PN, reçues du générateur de code de PN ;

de multiplication, en utilisant un premier multiplieur, de la sortie de l'étaleur de code pseudo-orthogonal par la composante réelle du code de PN reçue du répéteur pour masquage de PN de la composante réelle d'un signal de partie réelle ; et

de multiplication, en utilisant un second multiplieur, de la sortie de l'étaleur de code pseudo-orthogonal par la composante imaginaire du code de PN reçue du répéteur pour masquage de PN d'un signal de partie imaginaire.

9. Procédé tel que revendiqué dans l'une ou l'autre des revendications 7 ou 8, comprenant en outre les étapes :

de séparation, en utilisant un convertisseur de série en parallèle, des bits de rang pair et de rang impair issus du signal converti ;

de conversion, en utilisant un premier étaleur de code pseudo-orthogonal, du signal de bits de rang pair en M séquences parallèles de signal, de multiplication de chaque séquence de signal par le code pseudo-orthogonal, de production de M×N séquences étalées de signal, d'étalement des M séquences de signal et de conversion des M séquences étalées de signal en une séquence série ; et

de conversion, en utilisant un second étaleur de code pseudo-orthogonal, du signal de bits de rang impair en M séquences parallèles de signal, de multiplication de chaque séquence de signal par le code pseudo-orthogonal, de production de M×N séquences étalées de signal, d'étalement des M séquences de signal et de conversion des M séquences étalées de signal en une séquence série.

10. Procédé tel que revendiqué dans l'une quelconque des revendications 7 à 9, comprenant en outre les étapes :

de division des données de voie d'entrée, en utilisant un convertisseur de série en parallèle, d'une cadence de transmission de K en M séquences de signal ayant chacune une cadence de transmission de K/M, K étant un nombre entier ; et dans lequel l'étape de multiplication comprend :

la multiplication, en utilisant une pluralité de multiplieurs, des M séquences de signal par M codes orthogonaux différents, de préférence de Walsh, ayant chacun une longueur de N et la production des signaux étalés dans une matrice de $a_i W_{ij}$, où $a_i$ est une séquence divisée de signal et $W_{ij}$ est un élément de chaque code orthogonal, de préférence de Walsh ;

la conversion, en utilisant un convertisseur de série en parallèle, des signaux à spectre étalé sous la forme d'une matrice en données série d'une cadence de transmission de K ;

la multiplication, en utilisant un premier multiplieur, des données série par la composante réelle de code de PN pour masquage de PN ; et

la multiplication, en utilisant un second multiplieur, des données série par la composante imaginaire de code de PN pour masquage de PN.

11. Procédé tel que revendiqué dans l'une quelconque des revendications 7 à 9, comprenant en outre les étapes :

de division de données de voie d'entrée, en utilisant un convertisseur de série en parallèle, d'une cadence de transmission de K en M séquences de signal ayant chacune une cadence de transmission de K/M ; et dans lequel l'étape de multiplication comprend :

la multiplication, en utilisant une pluralité de multiplieurs, des M séquences de signal par M codes orthogonaux différents, de préférence de Walsh, ayant chacun une longueur de N et la production des signaux étalés dans une matrice de $a_i W_{ij}$, où $a_i$ est une séquence divisée de signal et $W_{ij}$ est un élément de chaque code orthogonal, de préférence de Walsh ;

la conversion, en utilisant un convertisseur de série en parallèle, des signaux à spectre étalé sous la forme d'une matrice en données série d'une cadence de transmission de K ;

la multiplication complexe, en utilisant un multiplieur complexe, des données série par les composantes réelle et imaginaire de code de PN.

12. Procédé tel que revendiqué dans l'une quelconque des revendications 7 à 11, dans lequel l'étape de conversion, en utilisant un convertisseur de signal, d'un flux de bits de données de voie d'entrée en un signal converti comprend les étapes de conversion, en utilisant un convertisseur de signal, des 0s et des 1s d'au moins un flux de bits de données de voie d'entrée en des +1s et -1s correspondants, respectivement.

**13.** Dispositif (413) de production de code pseudo-orthogonal destiné à étaler des données de voie dans un système de télécommunications à AMDC, le dispositif comprenant :

un moyen destiné à choisir M codes orthogonaux à partir de N codes orthogonaux, M et N étant des nombres entiers ;
un moyen destiné à entrelacer les éléments des M codes orthogonaux choisis ;
un moyen destiné à engendrer un code pseudo-orthogonal en utilisant les éléments entrelacés, le code pseudo-orthogonal étant ainsi représenté comme une séquence de M×N éléments.

**14.** Dispositif tel que revendiqué dans la revendication 13, dans lequel le moyen destiné à entrelacer comprend :

un moyen destiné à arranger les codes orthogonaux choisis en une matrice de M rangées par N colonnes ; et
un moyen destiné à sortir, par colonnes, les éléments des codes orthogonaux de la matrice.

**15.** Dispositif tel que revendiqué dans l'une ou l'autre des revendications 13 ou 14, dans lequel les codes orthogonaux sont des codes de Walsh.

**16.** Dispositif tel que revendiqué dans l'une quelconque des revendications 13 à 15, dans lequel les données de voie sont une voie de données de trafic.

**17.** Dispositif tel que revendiqué dans l'une quelconque des revendications 13 à 16, dans lequel M est égal à 2.

**18.** Dispositif tel que revendiqué dans l'une quelconque des revendications 13 à 17, comprenant en outre :

un moyen destiné à multiplexer, en utilisant un multiplexeur, les données de voie d'entrée pour produire M branches parallèles de données ;
un moyen destiné à étaler, en utilisant une pluralité d'étaleurs, les M branches parallèles multiplexées de données ; et
un moyen destiné à démultiplexer, en utilisant un démultiplexeur, les données étalées parallèles pour produire des données série.

**19.** Dispositif d'étalement de spectre apte à utiliser un code pseudo-orthogonal, pour utilisation dans un système de télécommunications à AMDC, le dispositif comprenant :

un convertisseur (411) de signal destiné à convertir un flux de bits de données de voie d'entrée en un signal converti ;
un générateur (413) de code pseudo-orthogonal destiné à engendrer un code pseudo-orthogonal qui est une combinaison de M codes orthogonaux différents comprenant un dispositif générateur de code pseudo-orthogonal tel que revendiqué dans l'une quelconque des revendications 13 à 18 ;
un générateur (415) de code de PN destiné à engendrer un code de PN comprenant des parties composantes réelle et imaginaire ;
une section (417) d'étalement de code pseudo-orthogonal et de masquage destinée à diviser le signal converti en M séquences de signal, à multiplier chaque séquence de signal par le code pseudo-orthogonal, à engendrer M×N séquences ; et à multiplier chaque séquence étalée de signal par un code de PN pour masquage de PN ; et
un filtre (418) en bande de base destiné à filtrer en bande de base la sortie de la section d'étalement de code pseudo-orthogonal et de masquage pour produire un signal filtré ; et un décaleur (421) de fréquence destiné à décaler la fréquence du signal filtré.

**20.** Dispositif tel que revendiqué dans la revendication 19, dans lequel la section d'étalement de code pseudo-orthogonal et de masquage de PN comprend :

un étaleur de code pseudo-orthogonal destiné à convertir le signal converti en M séquences parallèles de signal, à multiplier chaque séquence de signal par le code pseudo-orthogonal, à engendrer M×N séquences étalées de signal, à étaler les N séquences de signal, et à convertir les M séquences étalées de signal en une séquence série ;
un répéteur destiné à répéter M fois la composante réelle du code de PN et la composante imaginaire du code de PN, reçues du générateur de code de PN ;

un premier multiplieur destiné à multiplier la sortie de l'étaleur de code pseudo-orthogonal par la composante réelle du code de PN reçue du répéteur pour masquage de PN de la composante réelle d'un signal de partie réelle ; et

un second multiplieur destiné à multiplier la sortie de l'étaleur de code pseudo-orthogonal par la composante imaginaire du code de PN reçue du répéteur pour masquage de PN d'un signal de partie imaginaire.

**21.** Dispositif tel que revendiqué dans l'une ou l'autre des revendications 19 ou 20, comprenant en outre :

un convertisseur de série en parallèle destiné à séparer des bits de rang pair et de rang impair issus du signal converti ;

un premier étaleur de code pseudo-orthogonal destiné à convertir le signal de bits de rang pair en M séquences parallèles de signal, à multiplier chaque séquence de signal par le code pseudo-orthogonal, à engendrer M×N séquences étalées de signal, à étaler les M séquences de signal et à convertir les M séquences étalées de signal en une séquence série ; et

un second étaleur de code pseudo-orthogonal destiné à convertir le signal de bits de rang impair en M séquences parallèles de signal, à multiplier chaque séquence de signal par le code pseudo-orthogonal, à engendrer M×N séquences étalées de signal, à étaler les N séquences de signal et à convertir les M séquences étalées de signal en une séquence série.

**22.** Dispositif tel que revendiqué dans l'une quelconque des revendications 19 à 21, comprenant en outre :

un convertisseur de série en parallèle destiné à diviser des données de voie d'entrée d'une cadence de transmission de K en M séquences de signal ayant chacune une cadence de transmission de K/M, K étant un nombre entier ; et dans lequel le moyen de multiplication comprend :

une pluralité de multiplieurs destinée à multiplier les M séquences de signal par M codes orthogonaux différents, de préférence de Walsh, ayant chacun une longueur de N et à engendrer des signaux étalés dans une matrice de $a_i W_{ij}$, où $a_i$ est une séquence divisée de signal et $W_{ij}$ est un élément de chaque code orthogonal, de préférence de Walsh ;

un convertisseur de série en parallèle destiné à convertir les signaux à spectre étalé sous la forme d'une matrice en données série d'une cadence de transmission de K ;

un premier multiplieur destiné à multiplier les données série par la composante réelle de code de PN pour masquage de PN ; et

un second multiplieur destiné à multiplier les données série par la composante imaginaire de code de PN pour masquage de PN.

**23.** Dispositif tel que revendiqué dans l'une quelconque des revendications 19 à 21, comprenant en outre :

un convertisseur de série en parallèle destiné à diviser des données de voie d'entrée d'une cadence de transmission de K en M séquences de signal ayant chacune une cadence de transmission de K/M ; et dans lequel le moyen de multiplication comprend :

une pluralité de multiplieurs destinée à multiplier les M séquences de signal par M codes orthogonaux différents, de préférence de Walsh, ayant chacun une longueur de N et à engendrer des signaux étalés dans une matrice de $a_i W_{ij}$, où $a_i$ est une séquence divisée de signal et $W_{ij}$ est un élément de chaque code orthogonal, de préférence de Walsh ;

un convertisseur de série en parallèle destiné à convertir les signaux à spectre étalé sous la forme d'une matrice en données série d'une cadence de transmission de K ;

un multiplieur complexe destiné à multiplier de façon complexe les données série par les composantes réelle et imaginaire de code de PN.

**24.** Dispositif tel que revendiqué dans l'une quelconque des revendications 19 à 23, dans lequel le convertisseur de signal destiné à convertir un flux de bits de données de voie d'entrée en un signal converti comprend :

un convertisseur de signal destiné à convertir des 0s et des 1s dudit au moins un flux de bits de données de voie d'entrée en des +1s et -1s correspondants, respectivement.

FIG. 1

EP 0 898 393 B1

FIG. 2A

FIG. 2B

24

FIG. 2C

AUTO-CORRELATION

N

N:LENGTH OF WALSH CODE

1

0
0        1

DELAY TIME
(CHIP)

# FIG. 3A

CROSS-CORRELATION

N

N:LENGTH OF WALSH CODE

1

0
0        1

DELAY TIME
CHIP)

# FIG. 3B

FIG. 4

FIG. 5A

FIG. 5B

FIG. 5C

NORMAL
SIGNAL $W_{11}$ $W_{21}$ $W_{12}$ $W_{22}$ $W_{13}$ $W_{1N}$ $W_{2N}$

1CHIP
DELAYED
SIGNAL $W_{11}$ $W_{21}$ $W_{12}$ $W_{22}$ $W_{2(N-7)}$ $W_{1N}$ $W_{2N}$

ONE CHIP DURATION

# FIG. 6

FIG. 7A

FIG. 7B

FIG. 8

FIG. 9

EP 0 898 393 B1

FIG. 10

FIG. 11

EP 0 898 393 B1

FIG. 12

EP 0 898 393 B1

FIG. 13

EP 0 898 393 B1

FIG. 14

EP 0 898 393 B1